# EUROPEAN PATENT SPECIFICATION

(11) **EP 1 107 569 B1**
(45) Date of publication and mention of the grant of the patent: **31.01.2007**
(21) Application number: 00126721.0
(22) Date of filing: 05.12.2000
(51) Int. Cl.: H04N 1/32

(54) **Printing system and method thereof**
Drucksystem und Verfahren dafür
Système d'impression et procédé pour ceci

(30) Priority: 07.12.1999 JP 34811799
(43) Date of publication of application: 13.06.2001
(73) Proprietor: SONY CORPORATION, Tokyo 141 (JP)
(72) Inventor: Shindo, Mitsuyoshi, Shinagawa-ku, Tokyo (JP); Ashikawa, Hiroshi, Shinagawa-ku, Tokyo (JP); Sakai, Yorihiko, Shinagawa-ku, Tokyo (JP)
(74) Representative: Melzer, Wolfgang

(56) References cited:
- EP-A- 0 869 660
- EP-A- 0 930 774
- DE-A- 4 422 619
- JP-A- 11 272 870
- US-A- 5 625 757
- US-A- 5 974 401
- PATENT ABSTRACTS OF JAPAN vol. 1999, no. 08, 30 June 1999 (1999-06-30) & JP 11 088639 A (MURATA MACH LTD), 30 March 1999 (1999-03-30)

## Description

### BACKGROUND OF THE INVENTION

### FIELD OF THE INVENTION

The present invention relates to a printing system and a method thereof, and is applicable to an order/delivery system for digital printing for example.

### DESCRIPTION OF THE RELATED ART

When ordering prints of ordinary films (chlorobromide), conventionally photographed films are taken to a photo shop for developing and printing, and picked up on or after a date appointed.

More recently, with the advent of digital still cameras capable of capturing pictures electronically, a new mode of printing service is available: recording media such as memory cards or floppy disks with pictures recorded on them or digital still cameras themselves, are taken to a photo shop.

In such a conventional way, however, a user needs to take the trouble of going to a photo shop twice: first to place an order for prints and second to pick them up, which is troublesome as well as time consuming.

Even though home color printers are diffused more widely of late, it takes much time and trouble to print pictures in large quantities, which may give birth to a case where the costs of a printer and printing materials may be a great burden on a user.

Furthermore, in making an image processing such as composing a captured image with other ones or processing hues, a user is required to purchase application software on the market with which to make necessary image processing at home and to take a recording medium with image data processed as such to a photo shop to give an order for printing. In this case it is a prerequisite that the user owns a personal computer, and there might be a case where the costs of application software, etc. turn out to be a great burden on him/her.

Furthermore, to get printed pictures delivered to a person in a remote place, it is inevitable for a user, as mentioned above, to visit the shop again to pick up the printed pictures and pay for them. Then the user has to mail or ship a package of pictures or recorded medium by other means to a person in a remote place. Naturally the postage or cost of transportation and an extra time are required until it is delivered to the right person.

A printing system in which a service center and a plurality of printers and client computers are connected to a network for carrying out printing service is known from EP-A-930774.

Further, there is known from DE-A-4422619 a printing system in which a plurality of printers are connected to a plurality of terminals via a print server, wherein, when a terminal has a print job, the print server selects a suitable printer from the plurality of printers according to the print requests.

### SUMMARY OF THE INVENTION

It is an object of the present invention to provide a printing system and a method thereof with a significantly enhanced convenience and simultaneity in ordering and collecting prints.

This object is achieved by a printing system and a printing method according to the enclosed independent claims. Advantageous features of the present invention are defined in the corresponding subclaims.

With the present invention users can have images printed based on the image data retained in the server means with the use of any of printing means they may desire.

As a result, the printing system enables desired images to be printed easily, so that users do not need to visit print shops for ordering, thereby reducing users burden.

With the present invention a plurality of printing means, server means to retain image data supplied, and image data transferring means to transfer image data are connected one another through the network, so that image data is transferred to and retained in the server means via the network and that appointed portion of the image data is retrieved from the server means, thereby enabling images to be printed based on the image data retrieved.

Because of this printing method, desired images can be printed easily, obviating the need for users to visit print shops for ordering prints, thereby reducing uses' burden.

The nature, principle and utility of the present invention will become more apparent from the following detailed description when read in conjunction with the accompanying drawings in which like parts are designated by like reference numerals or characters.

### BRIEF DESCRIPTION OF THE DRAWINGS

In the accompanying drawings:
Fig. 1 is a block diagram of the structure of a printing system of this embodiment;
Fig. 2 is a block diagram of the structure of a print service supply device;
Fig. 3 is a block diagram of the structure of a personal computer in the print service supply device;
Fig. 4 is a block diagram of the structure of a print ordering device;
Fig. 5 is a block diagram of the structure of a personal computer in the print ordering device;
Fig. 6 is a block diagram of the structure of a host print service device;
Fig. 7 is a block diagram of the structure of the personal computer of the host print service device;
Fig. 8 is a block diagram of the structure of a server device;
Fig. 9 is a block diagram of the structure of the personal computer of the server device;
Fig. 10 is a schematic diagram of the initial frame of a monitor;
Fig. 11 is a flowchart for explaining print order/delivery procedure;
Fig. 12 is a schematic diagram of an operation selection frame displayed on the monitor;
Fig. 13 is a schematic diagram of a template setup frame displayed on the monitor;
Fig. 14 is a schematic diagram of an image input selection frame displayed on the monitor;

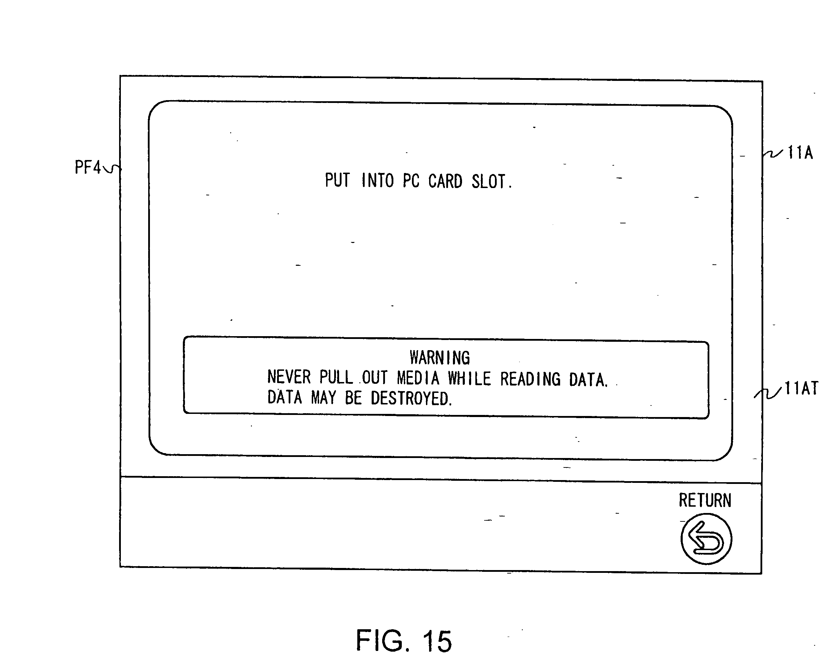

Fig. 15 is a schematic diagram of the image input selection frame displayed on the monitor;
Fig. 16 is a schematic diagram of a message displayed on the monitor while reading;
Fig. 17 is a schematic diagram of a reception number input frame displayed on the monitor;
Fig. 18 is a schematic diagram of a memory number input frame displayed on the monitor;
Fig. 19 is a schematic diagram of a print image selection frame displayed on the monitor;
Fig. 20 is a schematic diagram of a print setup frame displayed on the monitor;
Fig. 21 is a schematic diagram of the print setup frame displayed on the monitor;
Fig. 22 is a schematic diagram of a charge invoicing frame displayed on the monitor;
Fig. 23 is a schematic diagram of a print compete frame displayed on the monitor;
Fig. 24 is a schematic diagram of the save setup frame displayed on the monitor;
Fig. 25 is a schematic diagram of a transmitting image selection frame displayed on the monitor;
Fig. 26 is a schematic diagram of a receiving end selection frame displayed on the monitor;
Fig. 27 is a schematic diagram of the receiving end selection frame displayed on the monitor;
Fig. 28 is a schematic diagram of the receiving end selection frame displayed on the monitor;
Fig. 29 is a schematic diagram of the receiving end selection frame displayed on the monitor;
Fig. 30 is a schematic diagram of a print reservation frame displayed on the monitor;
Fig. 31 is a schematic diagram of the print reservation frame displayed on the monitor;
Fig. 32 is a schematic diagram of a user data input frame displayed on the monitor;
Fig. 33 is a schematic diagram of a print reservation change frame displayed on the monitor;
Fig. 34 is a flowchart for explaining template image transfer procedure;
Fig. 35 is a flowchart for explaining image data transfer procedure;
Fig. 36 is a flowchart for explaining provisional order procedure;
Fig. 37 is a flowchart for explaining print order procedure;
Fig. 38 is a flowchart for explaining provisional order procedure; and
Fig. 39 is a flowchart for explaining image print procedure.

### DETAILED DESCRIPTION OF THE EMBODIMENT

Preferred embodiments of the present invention will be described with reference to the accompanying drawings:

### (1) Structure of Printing System of This Embodiment

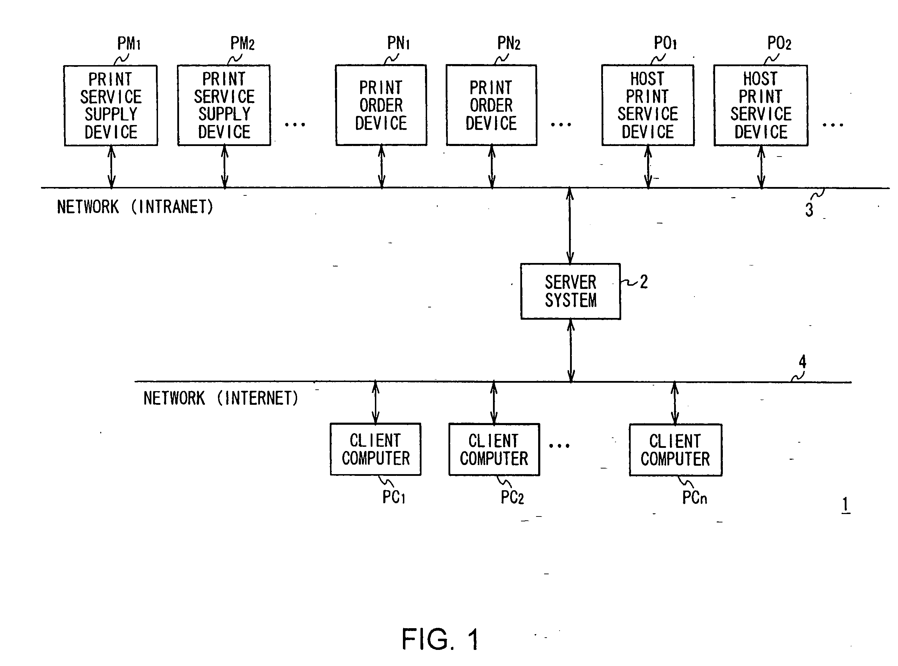

In Fig.1, a reference numeral 1 is a printing system in whole in one mode of carrying out the present invention, comprising a plurality of print service supply device PM₁, PM₂-PMₙ for printing images captured electronically on different media (not shown) by, for example, a digital still camera (not shown), a plurality of print ordering device PN₁, PN₂ - PNₙ, host print service device PO₁, PO₂ - POₙ for printing the images, and a server device 2 for managing the image data D2 of images and the ordering data D8, all of which are connected one another through a network 3 such as a telephone network.

This printing system is produced of the server device 2 connected, through a network such as the Internet, to a plurality of clients' computers PC₁, PC₂ - PCₙ of ordinary personal computers owned by users who have digital still cameras for example.

These print service supply device PM₁ - PMₙ and print ordering device PN₁ - PNₙ are installed at such places convenient to users as convenient stores and wickets of stations, etc. A host print service device PO₁ - POₙ is installed at convenience stores, photo shops, and small photo shops, etc. called "mini laboratories" in supermarkets.

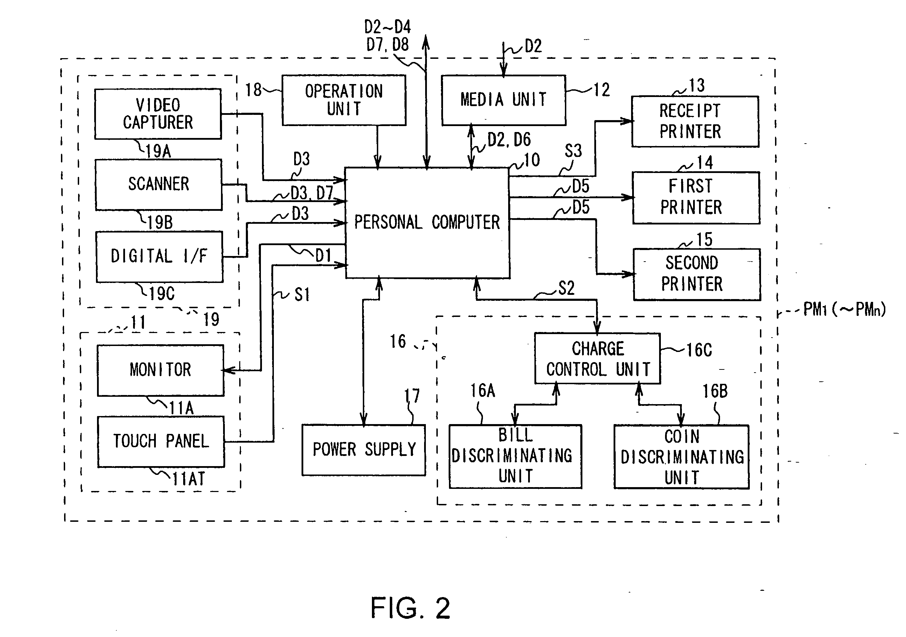

Equipped with a high-speed printer 30 (described later) capable of printing images at a high speed, a host printing service device PO₁ - POₙ can deal with a large volume of printing compared to the first and second printers 14, 15 (Fig. 2) of the print service supply device PM₁ - PMₙ. So a host printing service device PO₁ - POₙ incorporating the high-performance, high-speed printer 30 is supposed to be operated not by users themselves but by shop attendants.

In this case each of the print service supply device PM₁ - PMₙ captures image data D2, D3 (referred to as brought-in image data hereinafter) retained in recording media or digital still cameras users have brought in.

Each of the print service supply device PM₁ - PMₙ prints on a printing medium (postcard, seal, etc.) images (referred to as selected images hereinafter) users desire of the images based on the brought-in image data D2, D3 with the use of a print service supply device PM₁ - PMₙ or host printing service device PO₁ - POₙ users prefer, and creates ordering data D8 to record on a given recording medium (memory stick, compact flash, smart media, floppy disc, compact disc, or PC card, etc.), which is, along with the corresponding brought-in data D2, D3, transmitted to and retained in the server device 2 for a given period of time.

Each of the print service supply device PM₁ - PMₙ prints on the printing medium 'selected images' based on the brought-in data D2, D3 or the image data 4 (referred to as server image data hereinafter) retained in and supplied from the server device 2, or records the brought-in image data D2, D3 or server image data D4 on a given recording medium.

Meanwhile a print ordering device PN₁ - PNₙ captures brought-in image data D2, D3, selected images of which are printed on the printing medium by either a print service supply device PM₁ - PMₙ or host print service device PO₁ - POₙ according to a user's preference, or creates ordering data D8 to record on various recording media, which is, together with the brought-in data D2, D3 corresponding to this ordering data D8, transmitted to and retained in the server device 2 for a given period of time.

A host print service device PO₁ - POₙ prints on the printing medium at a high-speed the selected images based on the server image data D4 in accordance with the ordering data D8 supplied from a print service supply PM₁ - PMₙ or print ordering device PN₁ - PNₙ through the server device 2.

A host print service device PO₁ - POₙ captures the brought-in image data D2, D3, selected images of which are printed on the printing medium with the use of either a print service supply device PM₁ - PMₙ or another host print service device PO₁ - POₙ desired by a user, or creates the ordering data D8 to record on a given recording medium, which is, along with the corresponding brought-in data D2, D3, transmitted to and retained in the server device 2 for a,given period of time.

Furthermore, a host print service device PO₁ - POₙ prints selected images based on the brought-in image data D2, D3 on the printing medium on the spot, or records the brought-in image data D2, D3 on a given recording medium.

The server device 2 retains for a given period of time the brought-in data D2, D3 supplied from either a print service supply device PM₁ - PMₙ or another host print service device PO₁ - POₙ as well as the corresponding order data D8.

Based on this ordering data D8 the server device 2 transfers the corresponding image data D2 D3 as server image data D4 to a host print service device PO₁ - POₙ appointed by a user, and at the same time instructs the host print service device PO₁ - POₙ to output the server image data D4 (i.e., make a print or record on the recording medium).

The server device 2 also creates a clientele list on a basis of the ordering data D8, based on which user management is carried out.

In this manner, with the printing system 1 it is possible to have pictures taken by users at a sports meeting for children for example printed on the spot at a nearby site where a print service supply device PM₁ - PMₙ is installed. Or, in the case of a large number of images it is also possible for users to place an order for pictures at a place nearby where a print service supply device PM₁ - PMₙ or print ordering device PN₁ - PNₙ is installed, and to visit the shop to collect the printed pictures on an appointed date where the appointed host print service device PO₁ - POₙ is installed.

Furthermore, in such a case where a user wants to send such pictures to a relative living far away, the user can have them retained in the server device 2 by means of a nearby print service supply device PM₁ - PMₙ or print ordering device PN₁ - PNₙ. Then the relative makes an access to a nearby print service supply device PM₁ - PMₙ or host print service device PO₁ - POₙ within a predetermined period of time to retrieve the image data retained in the server device 2, based on which desired images can be printed or recorded on various recording media on the spot.

In addition to those features, with the printing system 1, in such environments where a user uses a computer, usually a client computer PC₁ - PCₙ, is an ordinary personal computer, or where individual homes or offices are equipped with personal computers, users can utilize their personal computers as a client computer PC₁ - PCₙ, in which a given program (referred to as 'print ordering program' hereinafter) is installed, by means of which an order is placed for printing with a host print service device PO₁ - POₙ in the intranet (network 3) of a business offering such services.

The print ordering program can be downloaded, along with an individual ID numbers assigned to a user, by making access to the server device 2 or receiving end of a print order. A client computer PC₁ - PCₙ, connected to the server device 2 through the Internet (network 4), can download image data retained in the server device 2 according to the print ordering program. In this way users can make prints using their own printers, or if necessary, they may order printing from a nearby host print service device PO₁ - POₙ.

### (2) Explanation of Device to be Connected to Printing System

### (2-1) Configuration of Print Service Supply Device

As shown in Fig. 2, a print service supply device PM₁ - PMₙ comprises a personal computer 10, display unit 11 consisting of a monitor 11A with a touch panel 11AT, printer for issuing receipts (referred to as receipt printer hereinafter), first and second printers 14, 15, media unit 12 composed of drivers (not shown) for said different recording media, charging unit 16 consisting of a charge control unit 16C, bill discriminator 16A and coin discriminator 16B, power supply 17, image data input unit 19 composed of a video capturing board 19A, scanner 19B, and digital interface circuit 19C, and operation unit 18 produced of a mouth or keyboard for maintenance service.

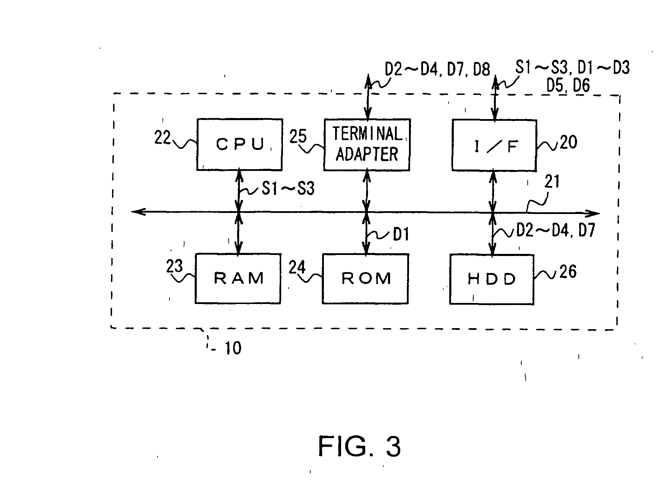

Also, as shown in Fig. 3, the personal computer 10 comprises a central processing unit (CPU) 22, a random access memory (RAM) 23, a read-only memory (ROM) 24, a terminal adapter 25, a hard disk drive 26, and an interface circuit 20, all of which are connected one another by means of a bus 21.

Based on a given operational program retained in the ROM 24, the CPU 22 captures, through the interface circuit 20 and bus 21 in order, various commands S1 fed through the touch panel 11AT, a charge recognition signal S2 fed from the charge unit 16 generated when money is put into the money payment slot (not shown) and image data D2, D3 of various recording media or a digital still camera captured by means of the media unit 12 or image data input unit 19, and maintenance operation data given through the operation unit 18. Or, the CPU 22 captures server image data D4 transmitted from the server device 2 through the terminal adapter 25 and bus 21 in order.

In practice, the CPU 22 retrieves the working program retained in the ROM 24 and puts it into the RAM 23 when brought-in data D2 is read out from the recording medium by the driver corresponding to a recording medium in use of the media unit 12, or when brought-in image data D3 is entered directly by means of a digital still camera via video capturing board 19A of the image data input unit 19, scanner 19B, and digital interface circuit 19C, or when server image data D4 is received from the server device 2 through the terminal adapter unit 25 with command S1 entered by a user through the touch panel 11AT at the same time.

The CPU 22 then starts executing processing according to the working program and retrieves operational image data D1 indicating the contents and procedure of the recording or transmission from the ROM 24, which is supplied to the monitor 11A through the bus 21 and interface circuit 20 in order.

At this stage the CPU 22 makes a backup by once recording on the hard disk drive 26 the brought-in image data D2 captured from the recording medium inserted into the media unit 12, brought-in data D3 entered through the video capturing board 19A, scanner 19B, and digital interface circuit 19C, or server image data D4 transmitted from the server device 2. The recording medium inserted into the media unit 12 is taken out by the user after the backup is made.

The CPU 22 starts controlling the charging unit 16 when a user puts bills or coins into the charge payment slot (not shown). That is, the charging unit 16 comprises a bill discriminator 16A for recognizing the kinds of bills and counting the number by the kind and a coin discriminator 16B for recognizing the kinds of coins and counting the number by the kind. The charge controlling unit 16C judges, under the control of the CPU 22, whether or not the total amount put in through the bill discriminator 16A and coil discriminator 16B is larger than that preset for the contents of process on the touch panel 11AT by the user.

The charge control unit 16C sends a charge confirmation signal S2 to the CPU 22 only when the total amount put in is larger than that preset on the touch panel 11AT, and if the amount paid is larger than that preset, the difference is discharged at the money discharge outlet (not shown) through the bill discriminator 16A and/or coin discriminator 16B.

When the charge confirmation signal S2 is given, the CPU 22 starts a processing operation according to the contents selected by a user. If the user chooses a printing process, the CPU 22 starts a printing operation, controlling either the first printer 14 or second printer 15 on which a printing medium (postcard, seal) is mounted, which coincides with the printing contents appointed by the user. If the user chooses an image recording process, the CPU 22 starts recording image data by controlling the driver in the media unit 12 of a recording medium corresponding to the recording contents appointed by the user.

In such a case that a user wants to have a large number of image prints or to have the prints delivered to a receiver end far away, the CPU 22, when a transmit process is selected in accordance with the user's operation, transfers the image data of images appointed by the user as well as the ordering data D8 corresponding to the image data to the server device 2 via the terminal adapter 25 or interface circuit with the network 3.

The ordering data D8 includes: the output end direction data composed of the place of installation and device discriminating ID for appointing a host print service device PO₁ - POₙ at the output end where the image data transmitted is output; print content data for appointing print contents at the output end (print format information, etc. determining the size of prints, number of prints and index print, multiple prints, seal print, or black and while prints, etc.); printout time and date indication data for appointing the time and date of printing; payment direction data for indicating the method of payment method (cash, credit card, or transfer through a bank, etc.) for settling the amount charged in accordance with the printed contents; user discriminating data for discriminating a user including the user's name, address and telephone number, and other necessary information such as the account number at a bank or post office (referred to as user information hereinafter), and user's individual discrimination code assigned to the user (referred to as ID NO. hereinafter).

The CPU 22 controls a receipt printer 13 on a basis of a charge confirmation signal 2 to issue and discharge a receipt (not shown) out of the receipt discharge outlet (not shown): a receipt (not shown) showing printed contents (image data ID, number of prints, etc.) and charge in accordance with the print process in the case that printing processes are executed according to the processing contents selected by the user; a receipt (not shown) showing recording contents (image data ID, etc.) and charge in accordance with the recording processes in the case that recording processes are carried out; a receipt showing transmission contents (image Nos., receiving end No. and reception No. etc.) in the case that transmission processes are conducted.

Composed of a small computer system interface (SCSI), an Institute Electrical and Electronics Engineer (IEEE) 1284, an IEEE1394, or a so-called RS-232C or a serial interface circuit on the premise of communications using telephone lines, the digital interface circuit 19C of the image data input unit 19 can capture image data directly from a digital still camera, etc. via said digital interface circuit 19C.

With the first and second printers 14, 15, a plurality of printing formats can be selected from among, for example, size of prints and index prints, multiple prints, seal prints, B/W prints, postcard prints, or prints in a special size, etc.

The first and second printers 14, 15 have postcards or seals, etc. installed inside in place, so that the first and second printers 14, 15 are capable of printing on the postcard or seal the images based on the printing data D5 corresponding to the print contents appointed by the user, which (postcard or deal) is discharged from the card discharge outlet (not shown).

Inserted by users into the media unit 12 are suitable recording media (memory stick, compact flash, smart media, floppy disc, compact disc, or PC card, etc.) so that each driver records recording image data D6 on a suitable recording medium according to the recording contents appointed by the user, which (recorded medium) is discharged from the media unit 12.

The image data of images selected by the user from among the images based on the brought-in data D2 and D3 backed up in the hard disk drive 26 are transferred to the server 2 through the terminal adapter unit 25.

In this mode of carrying out the present invention a print service supply,device PM₁ - PMₙ is allowed to make access to the server device 2 to capture a plurality of composite image (template images) data D7 composed of calendar frames, etc. for which images selected by the user are used to make calendars by way of example, or to capture such template images using the scanner 19B of the image data input unit 19. Such image data and template images are once recorded on the hard disk drive 26, which the CPU 22 retrieves responding to the operation by the user, consequently making it possible to execute composite processes with the use of such various kinds of template image data D7.

As described, with a print service supply device PM₁ - PMₙ it is possible to make prints on the spot responding to operation by users on a basis of brought-in image data D2 captured from the recording media, brought-in image data D3 entered by a digital still camera, or server image data D4 transmitted (or downloaded) from the server device 2, or to record the brought-in data D2, D3, or server image data D4 on the recording media, or to transmit the brought-in data D2, D3 to the server device 2.

### (2-2) Configuration of Print Ordering Device

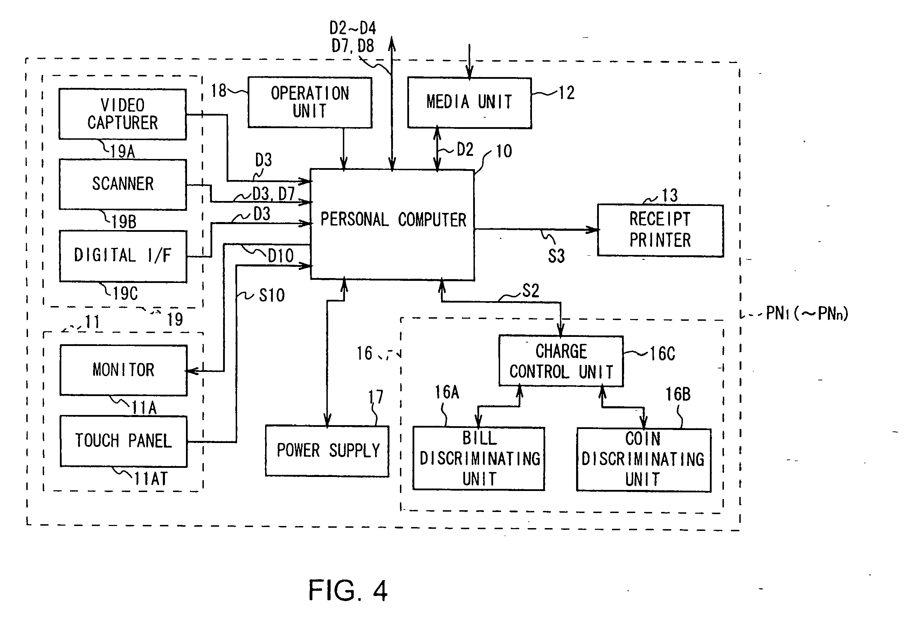

As can be known from Fig. 4, the same reference numerals are assigned to the corresponding parts as used in Fig. 2. A print ordering device PN₁ - PNₙ is constructed almost in the same way as a print service supply device PM₁ - PMₙ (Fig. 2), except for the elimination of the first and second printers 14, 15.

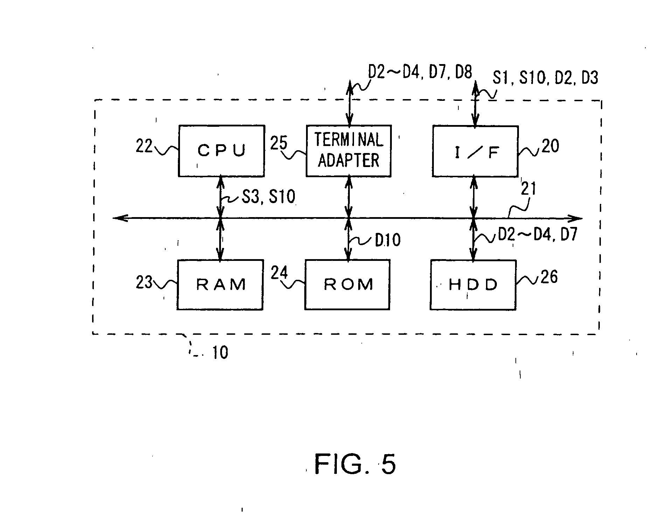

As is apparent from Fig. 5, the same reference numerals are assigned to the corresponding parts as used in Fig. 3. In this case a personal computer 10 is configured almost in the same way as the personal computer 10 in Fig. 3, except that the CPU 22 retrieves image data D10 containing the contents and procedure only for transmission according to a command S10, in stead of image data D1 containing the contents and procedures of printing, recording, and transmission according to the command S1 given by a user through the interface circuit 20 and bus 21 in order.

In practice, the CPU 22 retrieves the working program retained in the ROM 24 and puts it into the RAM 23 when a recording medium is inserted into the media unit 12 and brought-in data D2 is read out by the corresponding driver, or when brought-in image data D3 is entered directly by means of a digital still camera via video capturing board 19A of the image data input unit 19, scanner 19B, and digital interface circuit 19C, or when server image data D4 is received from the server device 2 through the terminal adapter unit 25 with a command S10 entered by a user through the touch panel 11AT at the same time.

The CPU 22 then starts executing processing according to the working program and retrieves operational image data D10 containing the contents and procedure of transmission from the ROM 24, conforming to the command S10, which is supplied to the monitor 11A through the bus 21 and interface circuit 20 in order.

At this stage the CPU 22 makes a backup by once recording on the hard disk drive 26 the brought-in image data D2 captured from the recording medium inserted into the media unit 12, brought-in data D3 entered by a digital still camera through the video capturing board 19A, scanner 19B, and digital interface circuit 19C of the image data input unit 19, or image data D4 transmitted from the server device 2. The recording medium inserted into the media unit 12 is taken out by the user after the backup is made.

The image data of selected images based on the brought-in image data D2, D3 backed up in the hard disk drive 26 is transferred, along with the ordering data D8 corresponding to the image data, to the server device 2 through the terminal adapter 25.

In this mode of carrying out the present invention a print ordering device PN₁ - PNₙ is allowed to make access to the server device 2 to capture various kinds of template image data 7, or to capture such template images using the scanner 19B of the image data input unit 19. Such image data and template images are once recorded on the hard disk drive 26, which the CPU 22 retrieves responding to the operation by the user, consequently making it possible to execute composite processes with the use of such various kinds of template image data D7.

As described, with a print ordering device PN₁ - PNₙ the first and second printers 14, 15, which are incorporated into a print service supply device PM₁ - PMₙ, are eliminated. Therefore, a print ordering device PN₁ - PNₙ carries out only transmitting processes (This means, a print ordering device PN₁ - PNₙ is devoted to transmitting image data.) : It transmits brought-in image data D2 captured from the recording medium as operated by users and brought-in image data D3 entered by a digital still camera. Accordingly the size of the device in whole is made compact, requiring a smaller area for installation. Also, in the case that users' needs involve only transmitting processes, they do not need to follow a plurality of processing and selecting operations for printing or recording processes as required of a print service supply device PM₁ - PMₙ. As a result, the transmitting processes can be done much faster.

### (2-3) Configuration of Host Print Service Device

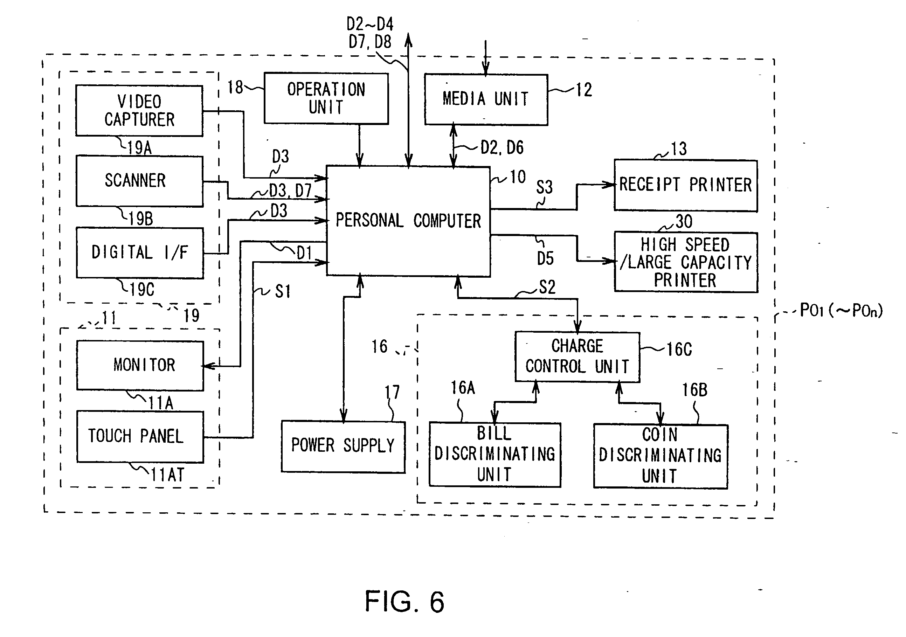

A host print service device PO₁ - POₙ is constructed almost in the same way as a print service supply device PM₁ - PMₙ, except that a high-speed printer 30 is provided in stead of the first and second printers 14, 15 as shown in Fig. 6 where the same reference numerals are assigned to the parts corresponding to those in Fig. 2.

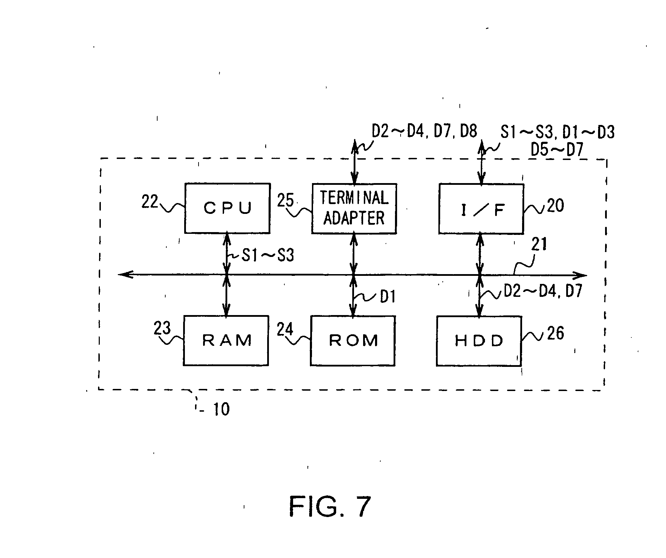

Also, the personal computer 10 is configured in the same way as the personal computer 10 as shown in Fig. 7 where the same reference numerals are assigned to the parts corresponding to those in Fig. 3, except that server image data D4 and the corresponding ordering data D8 are supplied from the server device 2 through the terminal adapter 25 and bus 21 in order.

In the case of the high-speed printer 30, a plurality of printing formats can be selected from among, for example, size of prints and index prints, multiple prints, seal prints, B/W prints, postcard prints, or prints with special size, etc.

The high-speed printer 30 has postcards or seals, etc. installed inside in place, so that the high-speed printer 30 is capable of printing on the postcard or seal at a high speed the images based on the printing data D5 corresponding to the print contents appointed by the user according to the server image data D4 and ordering data D8 supplied from the server device 2. Printed postcards or seals are discharged from the card discharge outlet (not shown).

As described, with a host print service device PO₁ - POₙ it is possible to print images at a high speed on the spot based on the server image data D4 transmitted from the server device 2 as operated by users, brought-in image data D2 captured from a recording medium, or brought-in data D3 entered with use of a digital still camera.

Accordingly users can make prints in a large quantity at a high speed by preferably using a host print service device PO₁-POₙ in the case that a large volume of prints are required.

### (2-4) Configuration of Server Device

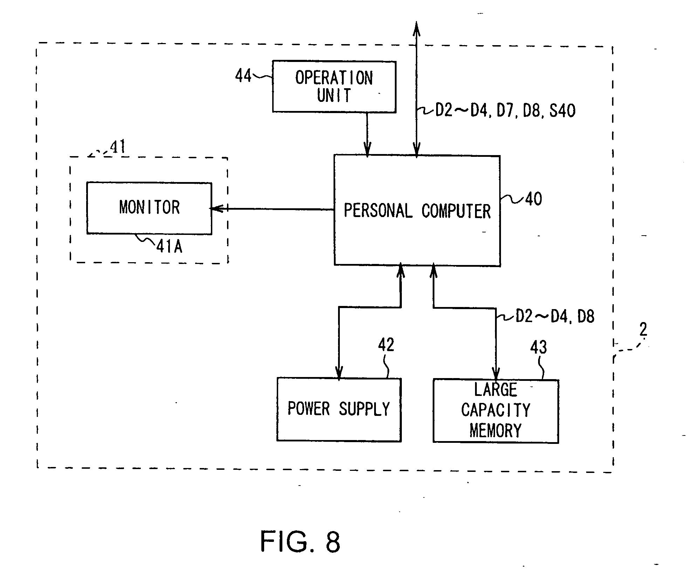

As shown in Fig.8, the server device 2 comprises a personal computer 40, display unit 41 produced of a monitor 41A, power supply 42, large-capacity memory 43, and operation unit 44 consisting of a mouth and keyboard, etc.

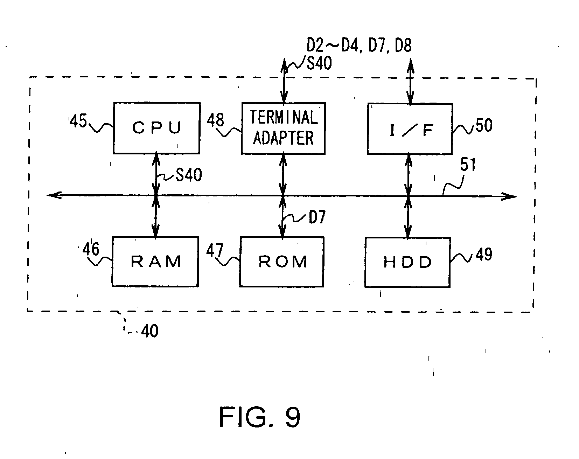

As shown in Fig. 9, the personal computer 10 comprises a CPU 45, RAM 46, ROM 47, terminal adapter unit 48, hard disk drive 49 and interface circuit 50, all connected one another by means of the bus 51.

In this case the CPU 45 has brought-in data D2 or D3 transmitted from a print service supply device PM₁ - PMₙ and print ordering device PN₁ - PNₙ, and the corresponding ordering data D8 stored in the large-capacity memory 43 through the terminal adapter 48, bus 51, and interface circuit 50 in order, which are retained there for a given period of time appointed by users or for a predetermined period of time.

At this time the CPU 45 turns on the working program retained in the ROM 45 if ordering data D8 is supplied, and starts operational processes to confirm a user and the method of payment for the charge based on the ordering data D8.

At the same time the CPU 45 makes access to a host print service device PO₁ - POₙ appointed by a user based on the ordering data D8 and confirms an order on a basis of the ordering data D8 with a host print service device PO₁ - POₙ. If there is no inconvenience (e.g., this host print service device PO₁ - POₙ is glutted with other orders), this order is made firm with the host print service device PO₁ - POₙ.

Then the CPU 45 transmits image data corresponding to the ordering data D8 to the host print service device PO₁ - POₙ as server data D4, and directs the printing, etc. of the images based on the server data D4 in accordance with the ordering data D8.

The CPU 45 also creates a clientele list based on such ordering data D8, which is stored on the hard disk drive 49 as customer data. When the same customer uses the service in future, the CPU 45 makes arrangements so that the customer can execute the processing contents the customer used previously with priority referring to the ID No. and password, etc.

Furthermore, the CPU 45 is capable of printing out the customer data, as required, connected to a printer (not shown) through the interface circuit 50.

Furthermore, the CPU 45 retrieves server image data D4 from the large-capacity memory 43 when a call demand S40 is given of the server image data D4 from a print service supply device PM₁ - PMₙ or print ordering device PN₁ - PNₙ through the terminal adapter 48 and bus 51 in order. The retrieved server image data D4 is transferred to the corresponding print service supply device PM₁-PMₙ or print ordering device PN₁ - PNₙ via the interface circuit 50, bus 51, and terminal adapter unit 48 in order.

In addition to the foregoing functions, if a retrieve demand S41 is issued of the template image data D7 by the corresponding print service supply device PM₁ - PMₙ, print ordering device PN₁-PNₙ, or host print service device PO₁ - POₙ through the terminal adapter unit 48 and bus 51 in order, the CPU 45 retrieves the template image data D7 from the ROM 47, which is transferred to the corresponding print service supply device PM₁ - PMₙ, print ordering device PN₁ - PNₙ, or host print service device PO₁ - POₙ through the bus 51 and terminal adapter unit 48 in order.

In this manner the server device 2 manages the image data supplied from a print service supply device PM₁ - PMₙ or print ordering device PN₁ - PNₙ on a basis of the corresponding ordering data, so that the server device 2 is capable of transferring the image data as server image data D4 to a host print service device PO₁ - POₙ appointed by the user, which is printed or recorded on the recording medium. Or, if required, the server image data D4 can be transferred to a print service supply device PM₁ - PMₙ or print ordering device PN₁ - PNₙ.

Also, the server device 2 creates a clientele list based on the ordering data D8 to be supplied, on a basis of which users are so managed that a particular user can execute the services with priority he/she used previously when the same customer uses this printing system 1 in future.

### (3) Print Order/delivery Procedure in Printing System

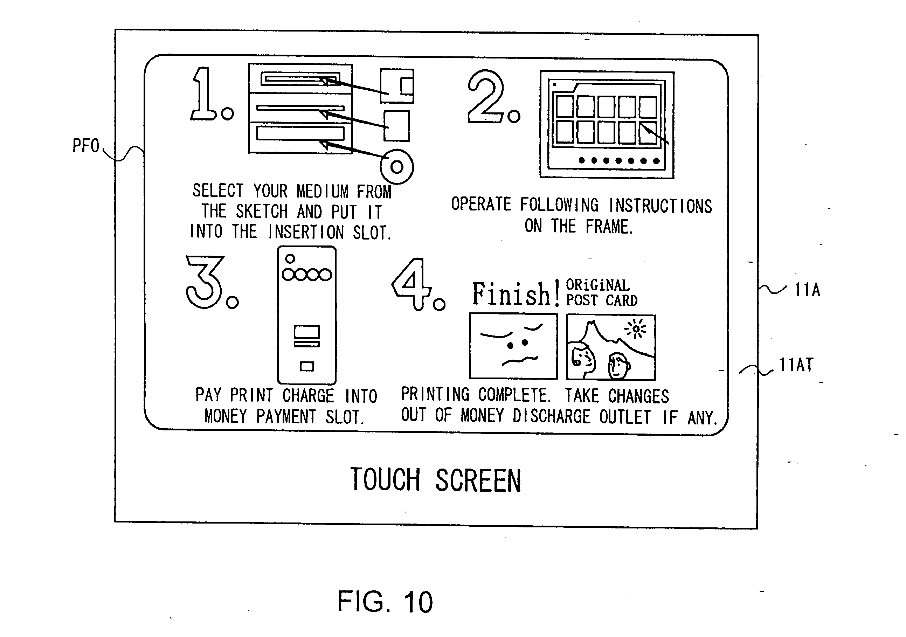

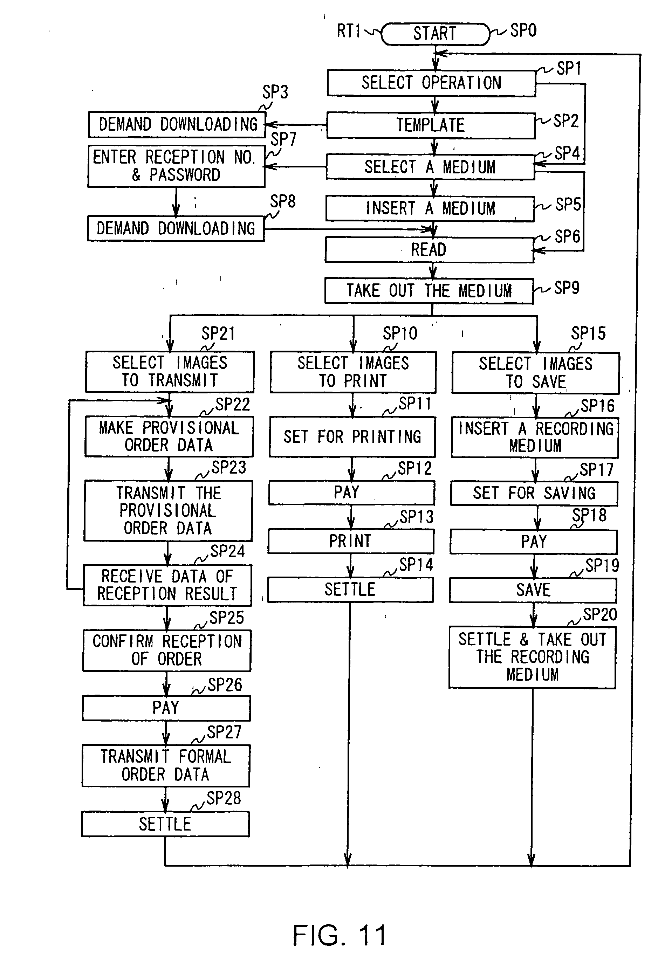

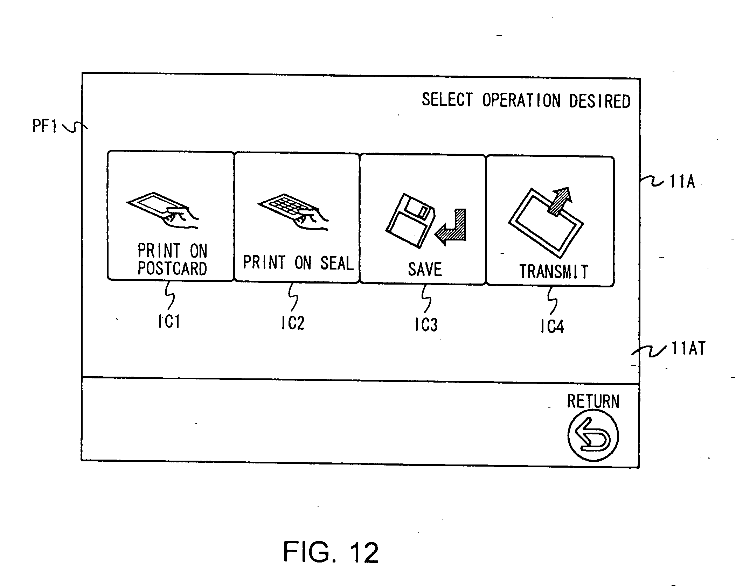

In practice, with the printing system 1 like this, the initial frame PFO as shown in Fig. 10 appears on the monitor 11A of the display unit of a print service supply device PM₁ - PMₙ or print ordering device PN₁ - PNₙ. The touching of the touch panel 11AT of the monitor 11A by users lets the CPU 22 of the print service supply device PM₁ - PMₙ or print ordering device PN₁ - PNₙ start the ordering/delivery process procedure RT1 shown in Fig. 11 at the step SPO, and prompts the monitor 11A to display an operation selection frame PF1 consisting of icons IC1 to IC4 of a service menu as shown in Fig. 12 showing "Print on postcard", "Print on seal", "Save on medium", and "Transmit image data", etc.

With a printing function eliminated, the print ordering device PN₁ - PNₙ displays a frame almost similar to the operation selection frame PF1 in Fig. 12, composed of the icons IC3, IC4 of a service menu showing "Save on recording medium" and "Transmit image data", etc.

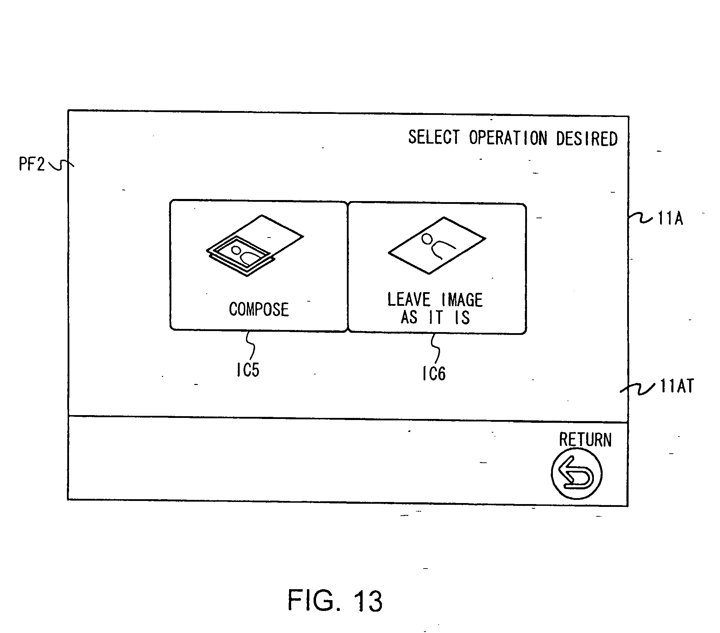

If one of the icons IC1 to IC4 on the operation selection frame PF1 is selected at the step SP1 by the user, the CPU 22 then lets the monitor 11A display icons IC5, IC6 as a template setup frame PF2 asking the user whether or not an image is to be composed in the selected service, as shown in Fig. 13.

If the icon IC5 is selected on the template setup frame PF2, the CPU 22 proceeds to the next step SP2, and in the case of downloading template images from the server device 2, it further proceeds to the step SP3 to make access to the server device 2, and demands template image data D7 to be downloaded.

And, in the case of capturing the template images at the step SP2 using a scanner 19B, the CPU 22 captures the template images with use of the scanner 19B.

The CPU 22 lets the monitor 11A display the template selection frame (not shown) composed of the icons showing a plurality of template images thus obtained, and if one of the icons of a plurality of the template images is selected by the user, the relevant information is retained in the RAM 23, which is used at a later step to compose images with the template images. Then the CPU 22 proceeds to the step SP4.

If the icon IC6 is selected from the template setup frame PF2 at the step SP1, the CPU 22 proceeds to the step SP4.

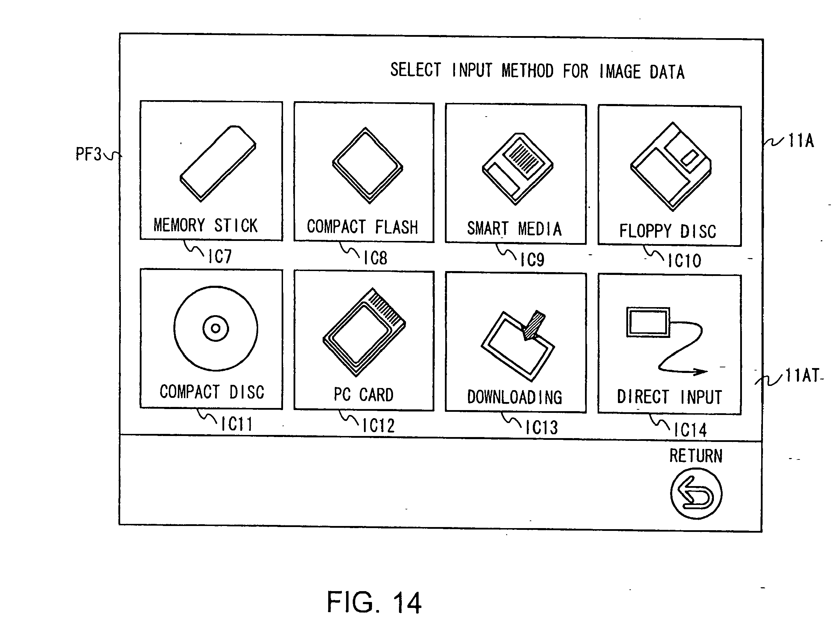

At this step SP4 the CPU 22 lets the monitor 11A display the image input selection frame PF3 as shown in Fig. 14, listing image data input methods: IC7 - IC12 corresponding to the types of recording media as input methods of image data; IC13 for "Download" for downloading the image data from the server device, and; IC14 for "Direct input" for entering image data directly from a digital still camera or scanner 19B.

In this way, if a user selects an icon (e.g., IC12 for PC card) for a recording medium from the image input selection frame PF3 displayed on the monitor 11A, the CPU 22 proceeds to the step SP5 to let the monitor 11A show the message PF4 to the effect "Insert recording medium (PC card)" corresponding to the icon IC12. 1

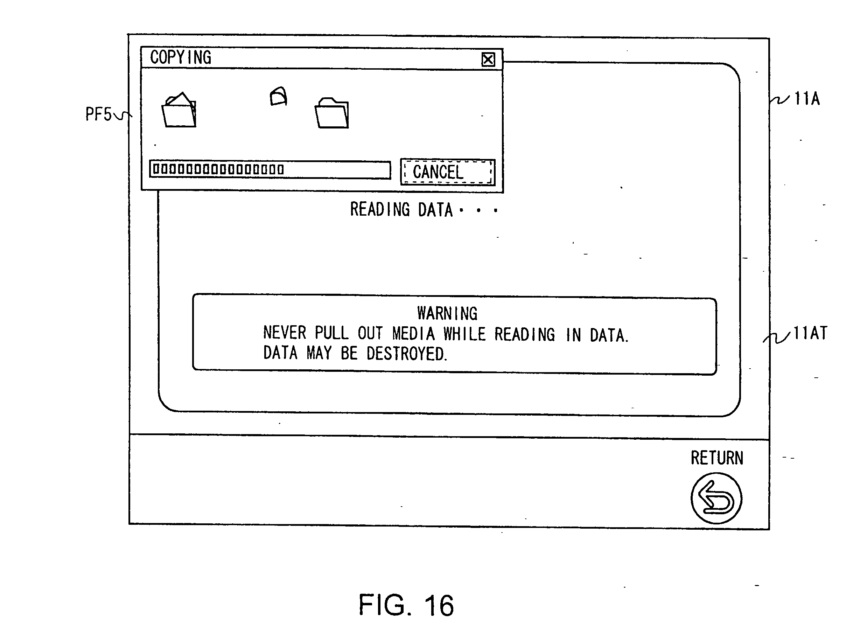

When a medium selected by the user is inserted into the media unit 12, the CPU 22 proceeds to the step SP6 to retrieve the image data retained in the PC card by controlling the corresponding driver in the media unit 12, and makes a backup by once recording all the image data D2 on the hard disk drive 26. While this operation, the CPU 22 lets the monitor 11A display the message PF5 to the effect "Reading" as shown in Fig. 16.

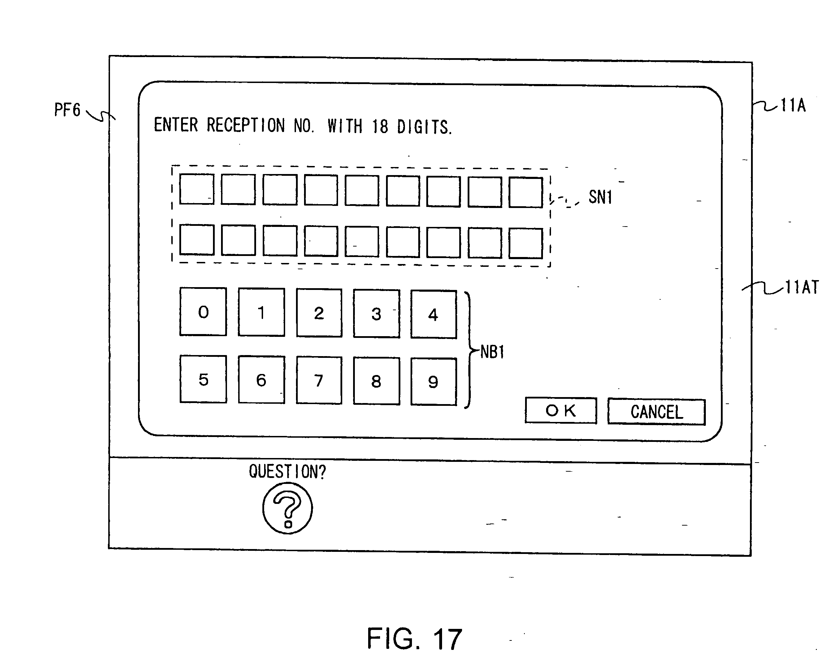

If, however, the icon IC13 for 'Download' is selected by the user at this step SP4 from the image input selection frame PF3 shown on the monitor 11A, the CPU 22 proceeds to the step SP7 to let the monitor 11A display the reception No. input frame PF6 as shown in Fig. 17, corresponding to the icon 13.

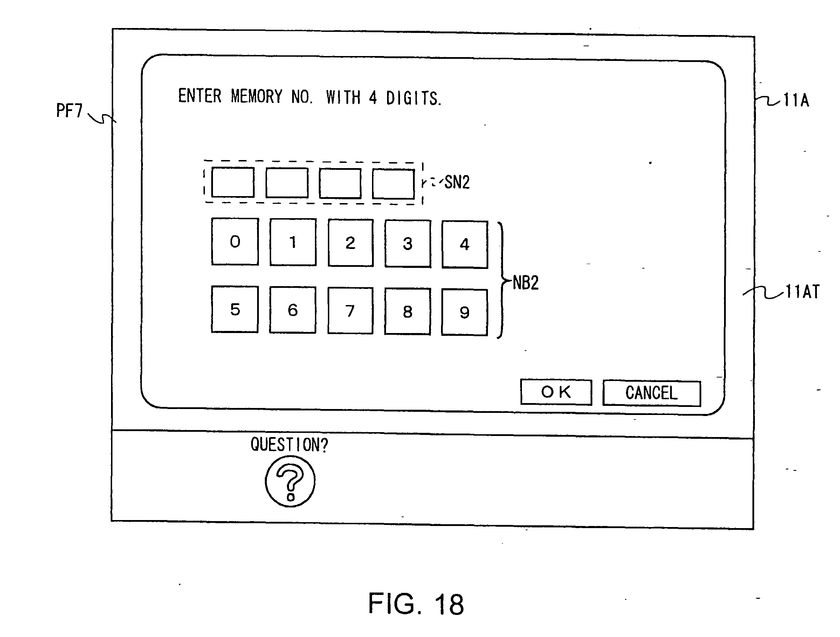

The reception number input frame RF6 includes a number input unit NB1 consisting of the digits "0" to "9" and a number display unit SN1 for displaying a reception number composed of e.g. 18 digits entered through the number input unit NB1. When a given number is entered by the user through the number input unit NB1, the CPU 22 lets the monitor 11A display a memory number input frame PF7 as shown in Fig.18.

The memory number input frame PF7 includes a number input unit NB2 consisting of the digit buttons "0" to "9" and a number display unit SN2 for displaying a memory number composed of e.g. 4 digits entered through the number input unit NB2 as a password for security purposes. When a desired number is entered by the user through the number input unit NB2, the CPU 22 proceeds to the next step SP8.

The CPU 22 makes access to the server device 2 at this step SP8 and demands the downloading of image data on a basis of the reception number and memory number entered at the previous step.

When the demanded image data is transferred from the server device 2 as server image data D4, the CPU proceeds to the step SP6 to retrieve the server image data D4, and makes a backup once recording all the data D4 on the hard disk drive 26. While this operation, the CPU 22 lets the monitor 11A display a message to the effect "Reading data", almost the same one as in Fig. 16.

If a user selects the icon IC14 for "Direct input" from the image input selection frame PF3 displayed on the monitor 11A at the step SP4, the CPU 22 proceeds to the step SP6 to let the monitor 11A display a message to the effect "Enter images" (not shown) corresponding to the icon IC14.

If a digital video camera (not shown) is connected to the video capturing board 19A, or if the pictures of images to enter are installed on the scanner 19B, or if a digital still camera is connected to the digital interface circuit 19C, the CPU 22 reads in image data D3 entered through the video capturing board 19A, scanner 19B, or digital interface circuit 19C, all of which image data D3 is once recorded on the hard disk drive 26 to make the backup. While this operation, the CPU 22 lets the monitor 11A display a message to the effect "reading data", almost the same one as in Fig. 16.

When the reading of the image data via the recording medium, server device 2, or image data input unit 19 is completed at this step SP6, the CPU 22 proceeds to the step SP9 to let the monitor 11A display a message to the effected "Backup on hard disk complete", and a message "Take out recording medium" in the case that a recording medium is installed, "Take out pictures" in the case that pictures are installed on the scanner 18B, or "Remove digital video camera or digital still camera" if they are connected (Not shown).

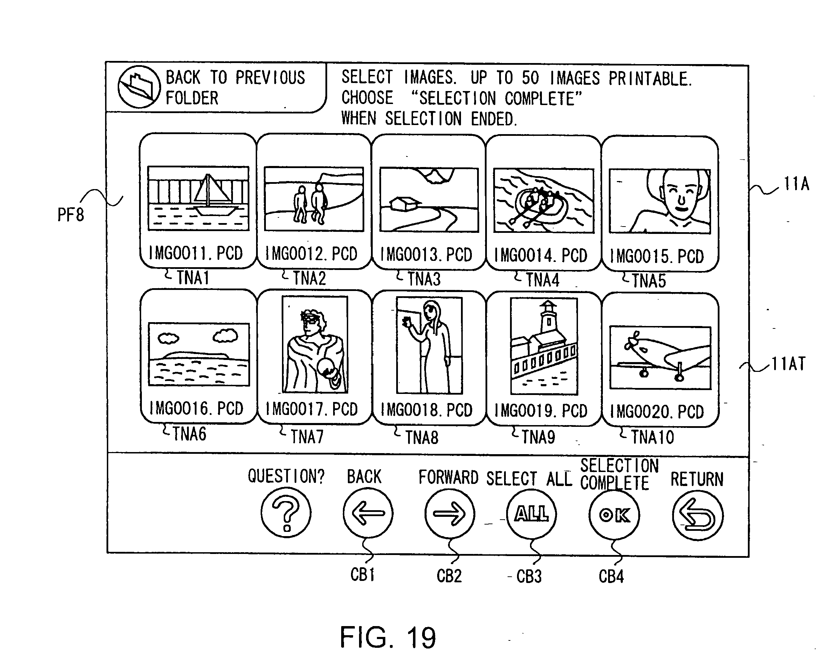

If the icon IC1 for "Print on postcard" or IC2 for "Print on seal" is selected at the step SP1 as mentioned in the foregoing case of the print service supply device PM₁ - PMₙ, the CPU 22 then proceeds to the step SP10 to let the monitor 11A display the print image selection frame PF8 as shown in Fig. 19.

The following printing processes are omitted from the print ordering device PN₁ - PNₙ because it does not have the printing function as explained before.

A plurality of images based on the image data entered are displayed by the given number (e.g. 10) as thumbnail images TNA1 to TNA10 on the print image selection image PF8. Placed below each thumbnail image TNA1 to TNA10 are the operation buttons CB1 to CB4 by which to select any number of images freely from among all the images. Of them the CB1 and CB2 are buttons by which to shift to the next 10 images back or forward respectively. The button CB3 is for selecting all the images and the button CB4 for finishing the selection of images.

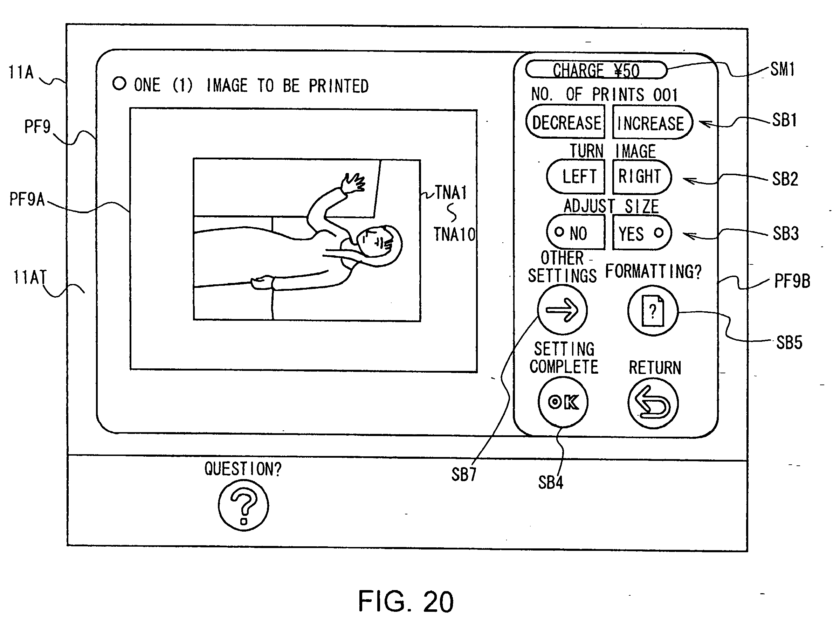

When all the images desired are selected from among said plurality of thumbnail images TAN1 to TNA10 appearing on the monitor 11A, the CPU 22 proceeds to the step SP11 to let the monitor 11A display a print setting image PF9 as shown in Fig. 20.

The print setting image PF9 displays the thumbnail image TNA1 to TNA10, enlarged to a given size, one by one within an image frame PF9A in a given size. A setting image PF9B for setting the print contents (the number of pictures, rotation of pictures, size adjustments) is displayed adjacent to the image frame PF9A.

Placed on the setting image PFB are increase/decrease buttons SB1 for setting the number of prints, rotation buttons SB2 for rotating an image by an angle of 90 [°] left or right, setting buttons SB3 for determining if the size of an image should be adjusted to that of the printing medium, button SB4 for terminating all of these operations, format setup button SB5 for setting up the format for plural kinds of image files, and switching button SB7 for switching over to other frames (not shown) to carry out image processing. Furthermore, displayed above the setting image PF9B is an amount set in the form of a charge display image SM1, according to the number of prints.

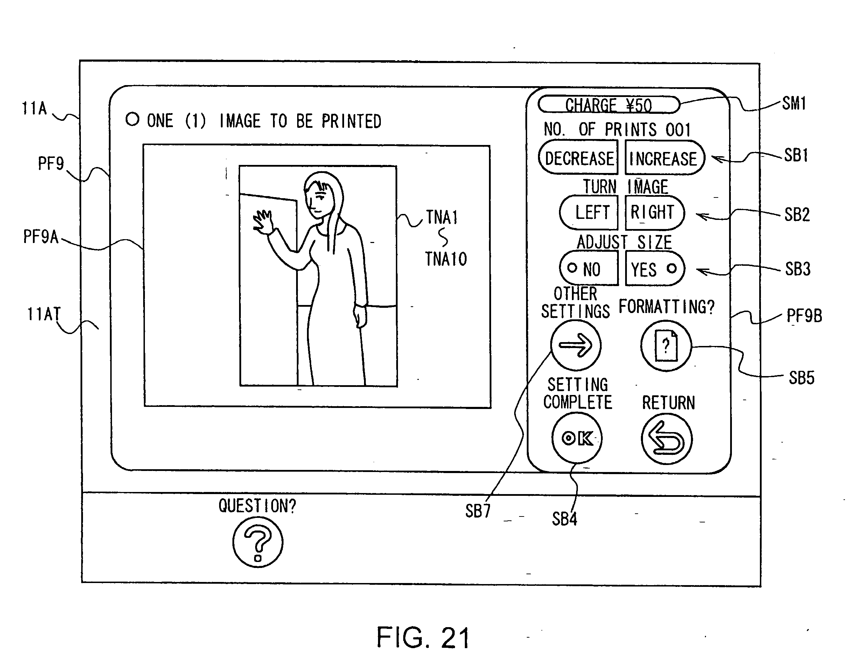

For example, when the button "To left" of the rotation buttons SB2 is depressed, the thumbnail images TNA1 to TNA10 displayed in the image frame PF9A is shown in a state where it is rotated 90 [°] to left within the image frame PF9A as shown in Fig. 21.

If the setting button SB5 for setting a format is depressed by a user on this printing setup frame PF9, the CPU 22 converts the image format for the thumbnail images TNA1 to TNA10 displayed within the frame PF9A to the format for e.g. Joint Photographic Coding Experts Group (JPEG), Tagged Image File (TIF), or Quick Draw Picture Format (PICT), etc.

If the switching button SB7 is depressed by the user on the print setup frame PF9, the CPU 22 changes the setup frame PF9B over to an image process selection frame (not shown) for selecting a process from among a plurality of image processes (e.g., color compensation process, gamma compensation process, trimming process, and enlarge or reduce process, etc.) to be imparted to a thumbnail image TNA1 to TNA10 shown within the frame PF9A. Then the CPU 22 imparts an image process selected on this image process selection frame to a thumbnail image TNA1 to TNA10 shown within the frame PF9A.

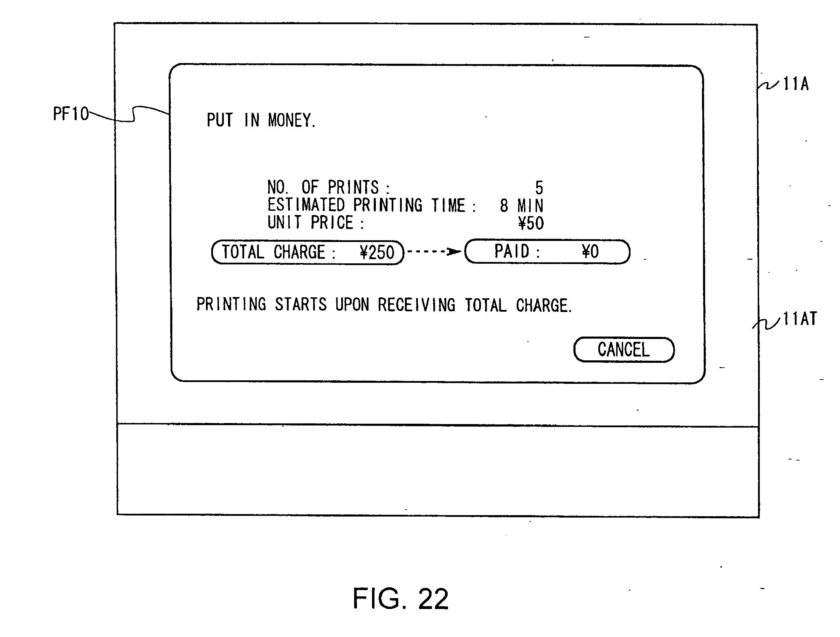

When it is confirmed that the printing contents are set to all the thumbnail images TNA1 to TNA10 by the user, the CPU 22 proceeds to the step SP12 and lets the monitor 11A display the charge set in accordance with the number of prints of a printing medium (postcard, seal) selected by the user as a charge invoicing frame PF10 as shown in Fig. 22.

If the charge control unit 16C confirms that an amount (bills and/or coins) larger than that set by the user is put into the money payment slot, the CPU 22 proceeds to the step SP13 and starts a printing operation controlling either the first or second printer 14, 15 on which a medium selected by the user is mounted.

Upon completion of the printing operation by either the first or second printer 14, 15 at the step SP13, the CPU 22 proceeds to the step SP14 to let the monitor 11A display the difference between the total amount thrown in and set amount, according to the judgment of the charge control unit 16 as well as a message "Printing Complete" within the print complete frame PF11. Then the printing medium with images selected by the user printed on it is discharged from a print discharge outlet (not shown).

At the same time the CPU settles accounts by discharging the changes from the money discharge outlet controlling the charge invoicing unit 16, then it returns to the step SP1.

At the same time the CPU 22 feeds a receipt issuing signal S3 to the receipt printer 13 as required by the user to have a receipt issued and discharged from the money discharge outlet.

Meanwhile, in the case that the icon IC3 for "Save on recording medium" is selected at the foregoing step SP1, the CPU 22 proceeds from the step SP9 to SP15 to let the monitor 11A display a saving image selection frame (not shown) showing the images by a given number (e.g., 10) based on the image data entered by the same method as used in Fig. 19.

When all the desired images are selected from among a plurality of thumbnail images displayed on the monitor 11A, the CPU 22 proceeds to the step SP16 to let the monitor 11A display a message to the effect "Insert medium (e.g., floppy disk)" (not shown).

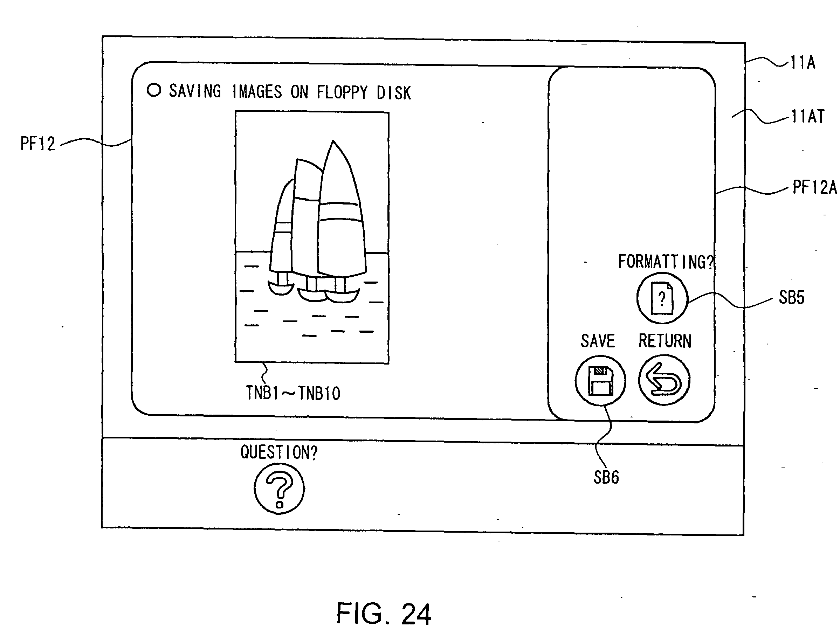

When a floppy disk is inserted into the media unit 12 by a user, the CPU 22 proceeds to the step SP17 to let the monitor 11A display a saving setup frame PF12 as shown in Fig. 24.

The saving setup frame PF12 displays a thumbnail image one by one, enlarged to a given size as well as a setup frame PF12 to set up the contents to save, adjacent to the said thumbnail image. Placed on the setup frame PF12 are the format setup button SB5 and save button SB6 to execute saving as in the setup image PF9B in the foregoing print setup frame PF9. '

When the user confirms that the saving contents are set against all the thumbnail images, the CPU 22 proceeds to the step SP18 to let the monitor 11A display the charge set in accordance with the saving contents confirmed by the user as a charge invoicing frame (not shown) with almost the same layout as in Fig. 22.

When the charge control unit 16C judges that a larger amount of money than the amount set is thrown in, the CPU 22 proceeds to the step SP19 to get recording operation for the saving contents started, controlling the corresponding driver inside the media unit 12.

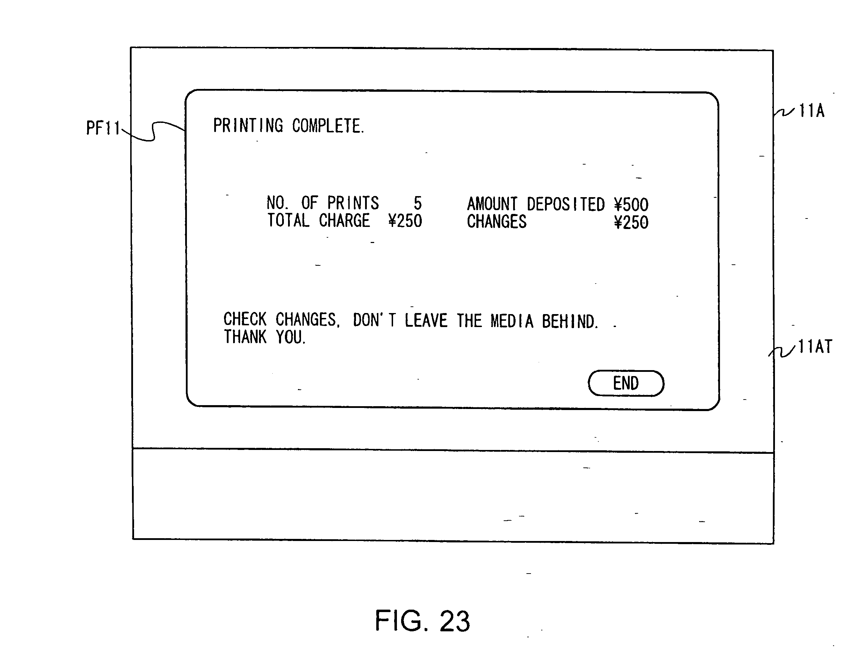

When recording operation is finished by the corresponding driver within the media unit 12 at the step SP19, the CPU 22 proceeds to the step SP20 to display the difference between the total amount thrown in and the amount set according to the judgment of the charge control unit 16C as well as a message "Recording complete. Take out floppy disk." as a recording complete frame (not shown) with almost the same layout as in Fig. 23.

At the same time the CPU 22 settles accounts by discharging the changes from the money discharge outlet controlling the charge invoicing unit 16 and returns to the step SP1 after confirming that the floppy disk is taken out by the user.

The CPU 22 issues a receipt by feeding to the receipt printer 13 a receipt issuing signal S3 to have a receipt issued as required by the user, which is discharged from the money discharge outlet.

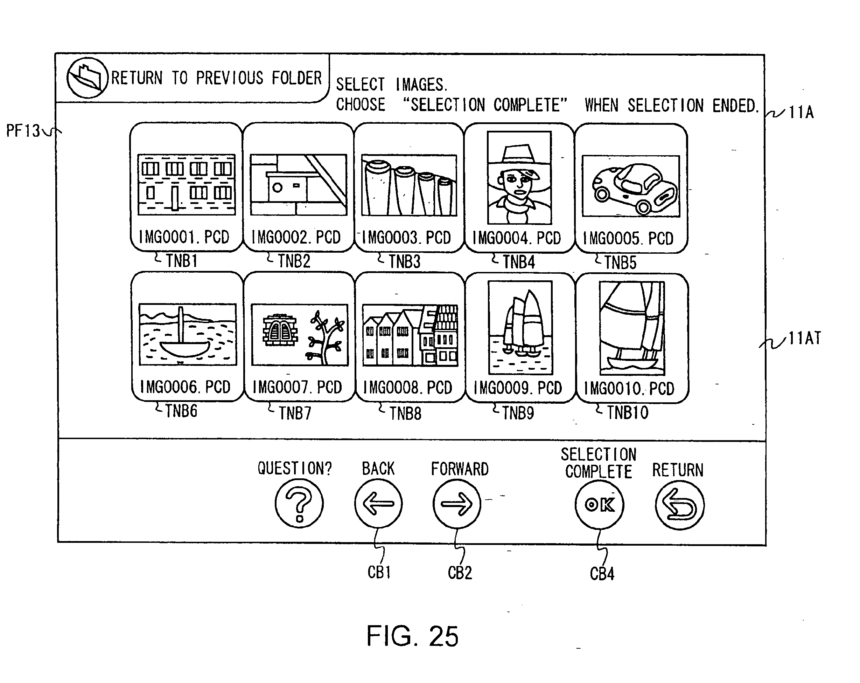

Meanwhile, in the case that the icon IC4 is selected for displaying "Transmit image data" at the foregoing step SP1, the CPU 22 proceeds from the step SP9 to the step SP21 to let the monitor 11A display a transmit image selection frame PF13 as shown in Fig. 25.

Displayed by a given number (e.g., 10) on the transmit image selection frame PF13 are a plurality of images based on the image data entered as thumbnail images TNB1 to TNB10. Displayed below each thumbnail image TNB1 to TNB10 are the CB1, CB2, and CB4 of the operation buttons CB1 to CB4 to select any number of images from among all the images mentioned above.

When all the images desired by the use are selected from among a plurality of thumbnail images TNB1 to TNB10 displayed on the monitor 11A, the CPU 22 proceeds to the step SP22 to create provisional ordering data.

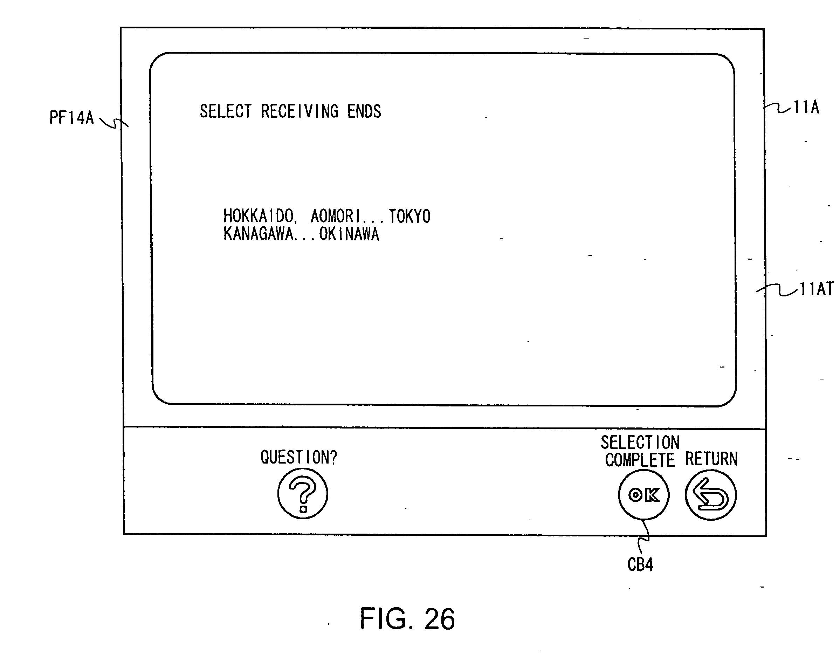

First, the CPU 22 lets the monitor 11A display a first order selection frame PF14A to appoint a host print service device PO₁-POₙ, with which an order is placed for printing selected images as shown in Fig. 26.

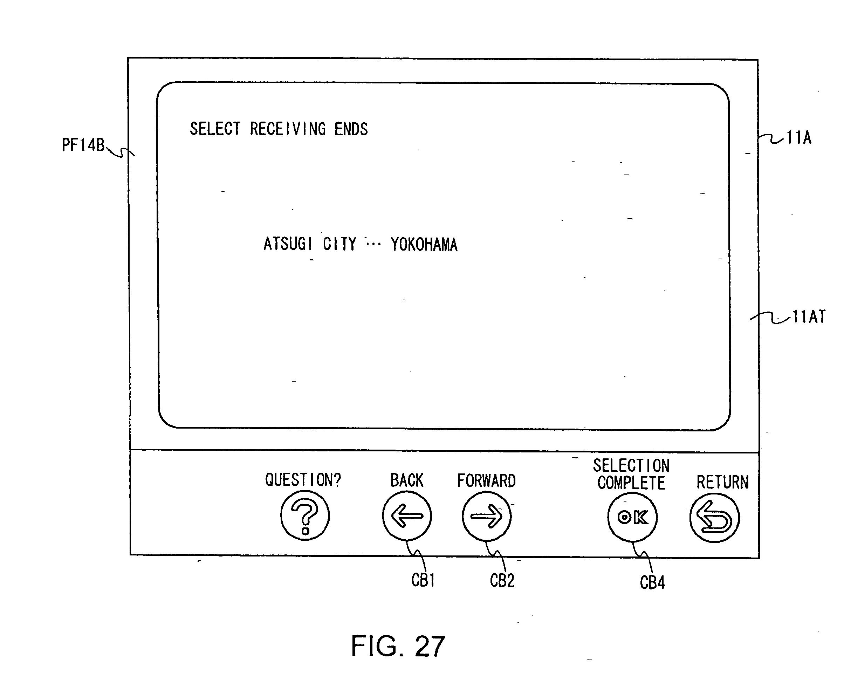

All the prefectures (including to, do, fu) in Japan are displayed on the first receiving end selection image PF14A, and when the user selects a prefecture desired, a second receiving end selection image PF14B appears for selection of a town as shown in Fig.27, with all the towns selected in the prefecture displayed on it.

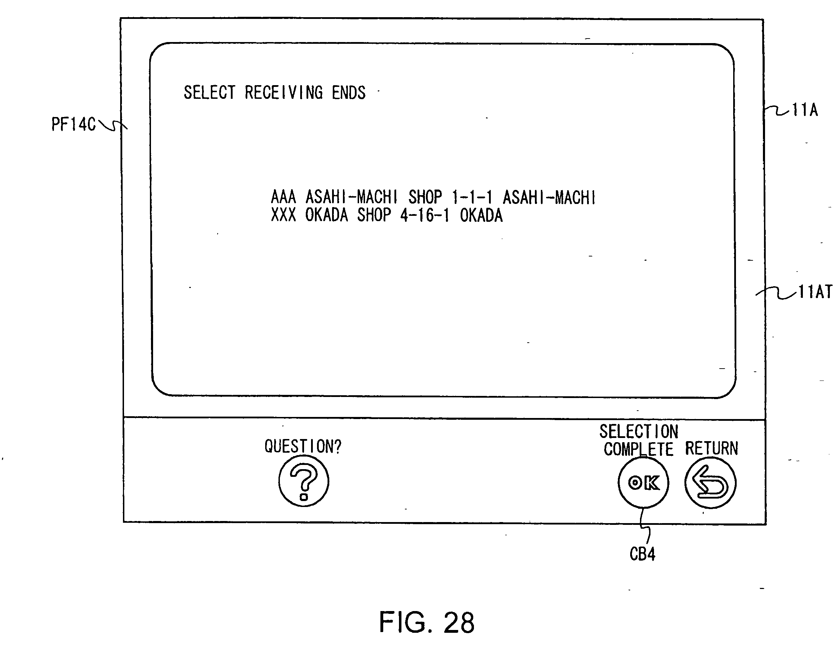

The selection of a desired town by the user brings a third receiving end selection image PF14C for selecting a shop's name and address, e.g. a convenience store where a host print service device PO₁ - POₙ is installed as shown in Fig. 28, with all the shop's name and addresses in the town displayed on it, where a host print service device PO₁ - POₙ is installed.

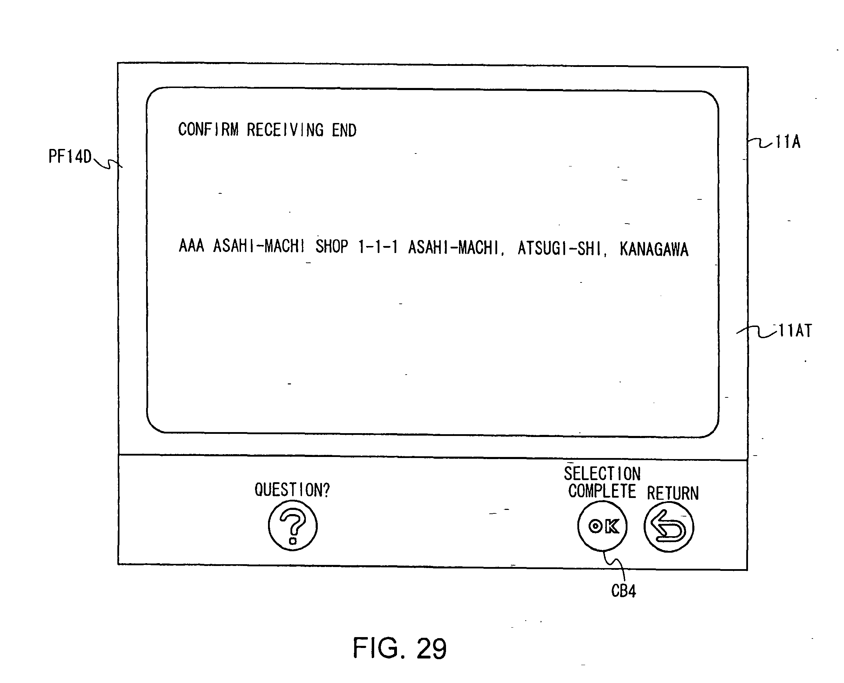

With the receiving end selection image PF14A - PF14C operated with the use of the operation buttons CB1, CB2 and CB4 in order as required, the CPU 22 lets the monitor 11A display an address (place) where a host print service device PO₁ - POₙ is installed as a receiving end confirmation image PF14D as shown in Fig. 29.

With a desired receiving end confirmed by the user on the receiving end confirmation image PF14D, the CPU 22 lets the hard disk drive 26 register the confirmed receiving end with "'election complete" appointed, with the use of the selection complete button CB4.

In the case of the present embodiment, a user is supposed to determine a receiving end from among those displayed (names of prefectures, including to, do, and fu). However, the present invention is not limited to it, but a plurality of other receiving ends can be appointed. Also, if the kana letters (typical Japanese letters) are made available for selection and appointment, the convenience in operation can be enhanced in the interest of users.

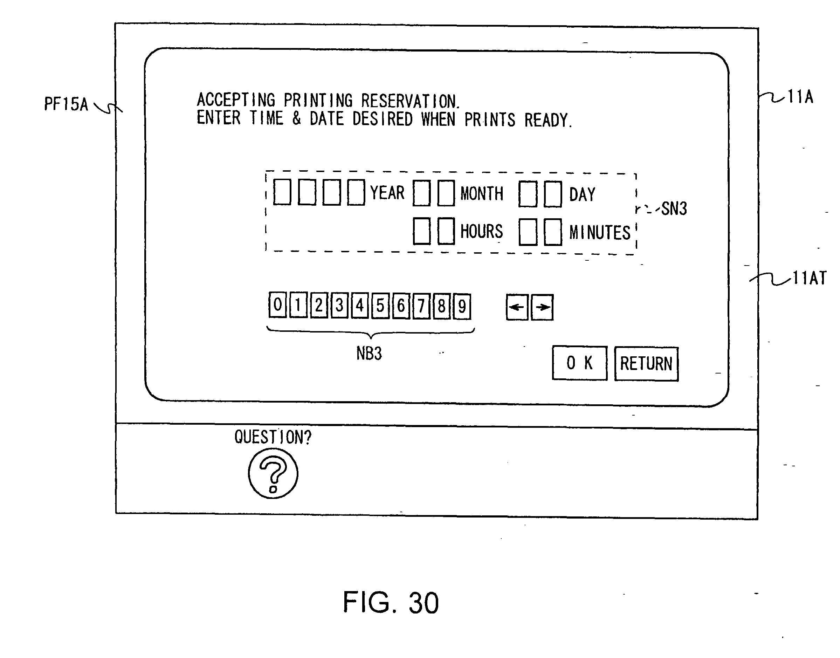

The CPU 22 then lets the monitor 11A display a first print reservation frame PF15A as shown in Fig. 30. The first print reservation frame PF15A comprises a number input unit NB3 to enter the digits "0" to "9" and a reserved data indication unit SN3 to indicate a desired time and date when the prints entered are finished through said reserved data indication unit SN3.

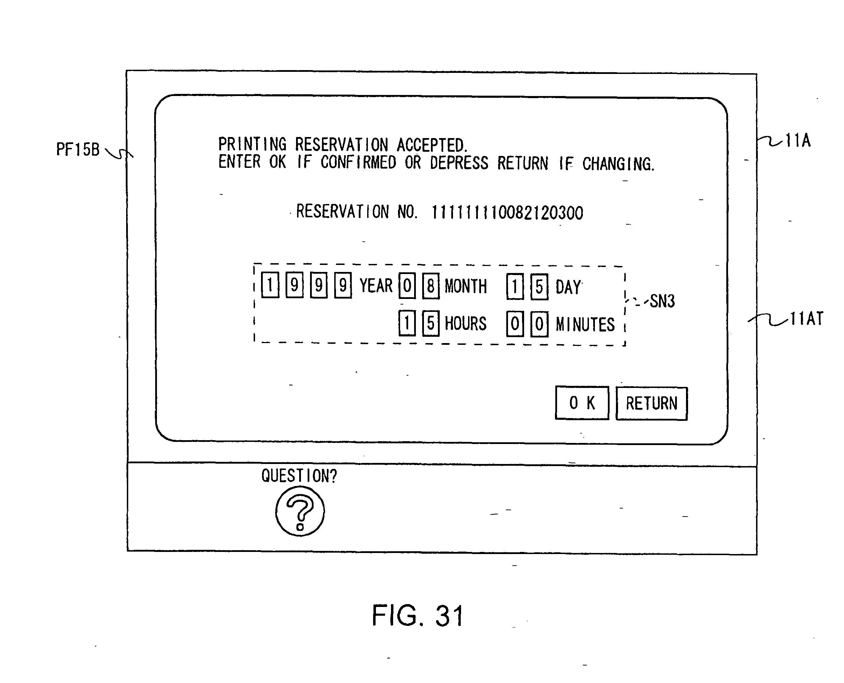

If the user enters a desired time and date (e.g., 15:00, Aug. 15, 1999) when the prints are available on the first print reservation frame PF15A through the number input unit NB3, the CPU 22 lets the monitor 11A display a second print reservation frame PF15B as shown in Fig. 31.

The second print reservation frame PF15B comprises a reserved time and date indicator SN3 and reservation number in accordance with the reservation, with a message "reservation received". In this way the CPU 22 lets the user confirm the reservation date on the second print reservation frame PF15B.

Then the CPU 22 lets the monitor 11A display a user information setup frame (not shown) to appoint and enter a user's name, address, telephone number, password freely set by the user, and method of payment for the printing charge (in cash, transfer through a bank, or by credit card, etc.).

In this way the user enters necessary items according to the user information setup frame. In the case that the user selects a transfer through a bank or credit cart as a method of payment, he/she is asked to enter his/her account number at a financial institution (e.g., a bank or post office). According to it, the CPU 22 assigns a membership number composed of eight (8) digits for example to the user.

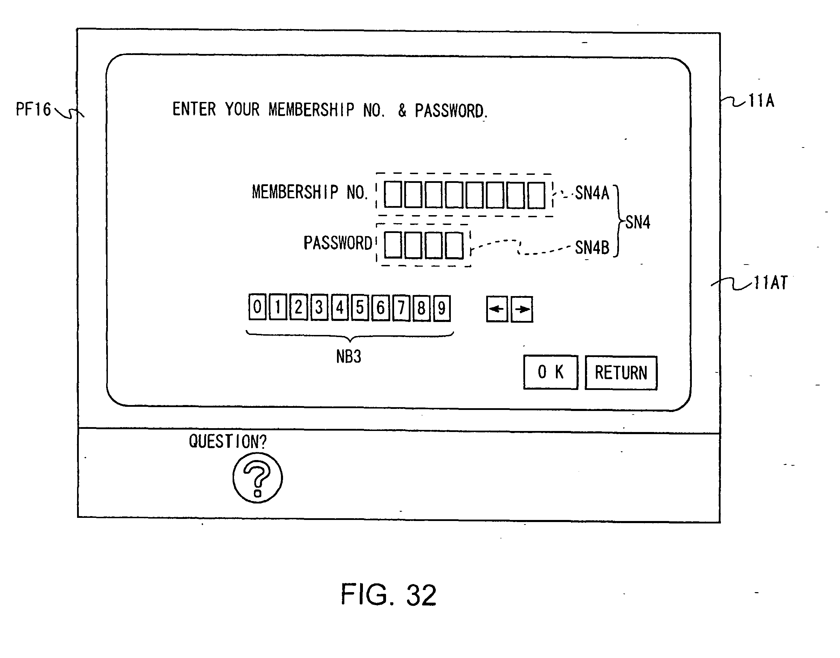

Detailed inputs like the foregoing on the part of the user are required only at the first occasion of use. Once the user data is entered, the CPU 22 transfers it to the server device 2 to have it memorized in the large-capacity memory 43. When the same user uses a similar service, the CPU 22 lets the monitor 11A display the user data input frame PF16 as shown in Fig. 32.

The user data input frame PF16 comprises the number input unit NB3, membership number display unit SN4A for displaying a user's particular membership number entered through the number input unit NB3, and a password display unit SN3B for displaying a password composed of four (4) digits entered through the number input unit NB3 for security purposes. Therefore, the CPU 22 distinguishes the user with the number entered by the user through the number input unit NB3.

A password is set freely by a user on the user information setup frame when the user uses the service for the first time, and is provided to prevent the image data retained in the server device 2 from being downloaded from it arbitrarily by other persons.

When such provisional ordering data as mentioned in the foregoing is created at the step SP22, the CPU 22 proceeds to the step SP23 to transmit this provisional ordering data to the server device 2, and then stands by for the reception result to be transmitted by the server device 2, obtained on a basis of the provisional ordering data received.

When the reception result is transmitted from the server 2 as reception result data, the CPU 22 proceeds to the step SP24 to receive the reception result data. And, the CPU 22 proceeds to the step SP25 to confirm the contents of the reception result received. If the contents are acceptable as a provisional order (acceptable as an order), the CPU 22 proceeds to the next step SP26 to let the monitor 11A display a charge invoicing frame (not shown) with almost the same layout as in Fig. 22 displaying the charge set according to the ordering contents selected by the user.

If the charge control unit 16 judges that the total amount of monies (bill and/or coins) thrown into the money slots is greater than the charge set by a user, the CPU 22 proceeds to the step SP27 to retrieve the corresponding image data and ordering data retained on the hard disk drive 26, which are transmitted as a formal order to the server device 2 through the bus 21 and terminal adapter unit 25 in order.

When the transmission of the formal order data is completed at the step SP27, the CPU 22 proceeds to the step SP28 to let the monitor 11A display the difference between the total amount thrown in and the charge set according to the judgement of the charge control unit 16C and a message to the effect 'Ordering complete' in almost the same "ordering complete" frame (not shown) as in Fig. 23.

At this time the CPU 22 settles accounts by discharging the changes from the money discharge outlet controlling the charging unit 16, and then returns to the step SP1.

Simultaneously the CPU 22 controls the receipt printer 13 with a receipt issuing signal S3 to have a receipt with the reception number of the order issued as required by the user, which is discharged from the money discharge outlet.

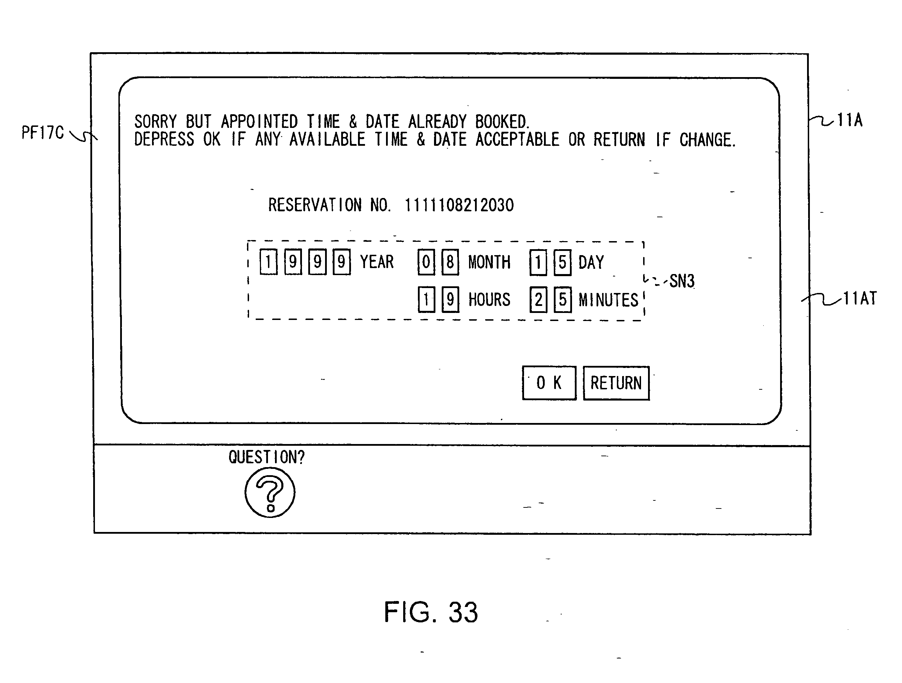

If, however, the contents of the reception result received at the step SP25 are judged unacceptable as a provisional order (due to a large number of other reservations, for example), the CPU 22 lets the monitor 11A display a print reservation change frame PF17 as shown in Fig. 33.

Displayed at the reservation date display area SN3 in the print reservation change frame PF17 is a time and date appointed by the server device 2 nearest to the time and date the user desired to reserve.

If the change to the time and date on the print reservation change frame PF17 is accepted by the user, the CPU 22 proceeds to the next step SP26 to let the monitor 11A display the charge set according to the order contents selected by the user in the charge invoicing frame (not shown) with almost the same layout as in Fig. 25.

If the charge control unit 16C judges that the amount of monies (bills and/or coins) put into the charge payment slot is greater than the charge set by the user, the CPU 22 proceeds to the step SP27 to retrieve the corresponding image data and ordering data (with a reservation date changed) retained in the hard disk drive 26, which are transmitted as a formal order to the server device 2 through the bus 21 and terminal adapter unit 25 in order.

When the transmission of the formal order is completed at the step SP27, the CPU 22 proceeds to the step SP28 to let the monitor 11A display the difference between the total amount of throw-in monies and the set charge as judged by the charge control unit 16C, along with a message to the effect 'Ordering complete' in an ordering complete frame (not shown) with almost the same layout as in Fig. 23.

At the same time the CPU 22 controls the charging unit 16 to settle accounts by discharging the changes from the money discharge outlet, and then returns to the step SP1.

Simultaneously the CPU 22 controls the receipt printer 13 with the receipt issuing signal S3 to have a receipt with the reception number of the order issued as required by the user, which is discharged from the money discharge outlet.

If, however, a time and date in the print reservation change frame PF17 displayed on the monitor 11A at the step SP25 is inconvenient to the user, the CPU 22 returns to the step SP22 to resume setting a reservation time and date.

The CPU 22 repeats a loop of SP22 to SP25 until a reservation time and date acceptable to the user are confirmed at the step SP25. When the change in a reservation time and date are approved by the user, the CPU 22 proceeds to the next step SP26 to let the monitor 11A display the charge set according to the ordering contents selected by the user in the charge invoicing frame (not shown) with almost the same layout as in Fig. 22.

If the charge control unit 16 judges that the total amount of monies (bill and/or coins) put into the money slots is greater than the charge set by the user, the CPU 22 proceeds to the step SP27 to retrieve the corresponding image data and ordering data (with reservation time and date changed) retained on the hard disk drive 26, which are transmitted as a formal order to the server device 2 through the bus 21 and terminal adapter unit 25 in order.

When the transmission of the formal order data is completed at the step SP27, the CPU 22 proceeds to the step SP28 to let the monitor 11A display the difference between the total amount put in and the charge set according to the judgement of the charge control unit 16C, along with a message to the effect "Ordering complete" in almost the same "ordering complete" frame (not shown) as in Fig. 23.

At this time the CPU 22 settles accounts by discharging the changes from the money discharge outlet controlling the charging unit 16, and then returns to the step SP1.

Simultaneously the CPU 22 controls the receipt printer 13 with a receipt issuing signal S3 to have a receipt with the reception number of the order issued as required by the user, which is discharged from the money discharge outlet.

By repeating a loop SP1 to SP14, SP1 to SP9 - SP15 to SP20, or SP1 to SP9 - SP21 to SP28 in order, the CPU 22 can carry out printing on the postcard or seal on the spot images selected by the user from among a plurality of images based on the image data entered, saving the image data of the corresponding images, or ordering prints based on the corresponding image data with an output place appointed.

The user is supposed to notify, say, a relative living far away of the reception number of the receipt obtained and password set by himself/herself by the telephone for example. Then the relative visits a nearby shop having a print service supply device PM₁ - PMₙ or print ordering device PN₁ - PNₙ to have images printed based on the image data retained in the server device 2, to have the image data recorded on a given recording medium, or to have prints ordered based on the image data by carrying out the foregoing input operations according to the reception number and memory number notified by the user.

### (4) Various procedures in Server Device

### (4-1) Template Image Transfer Procedure

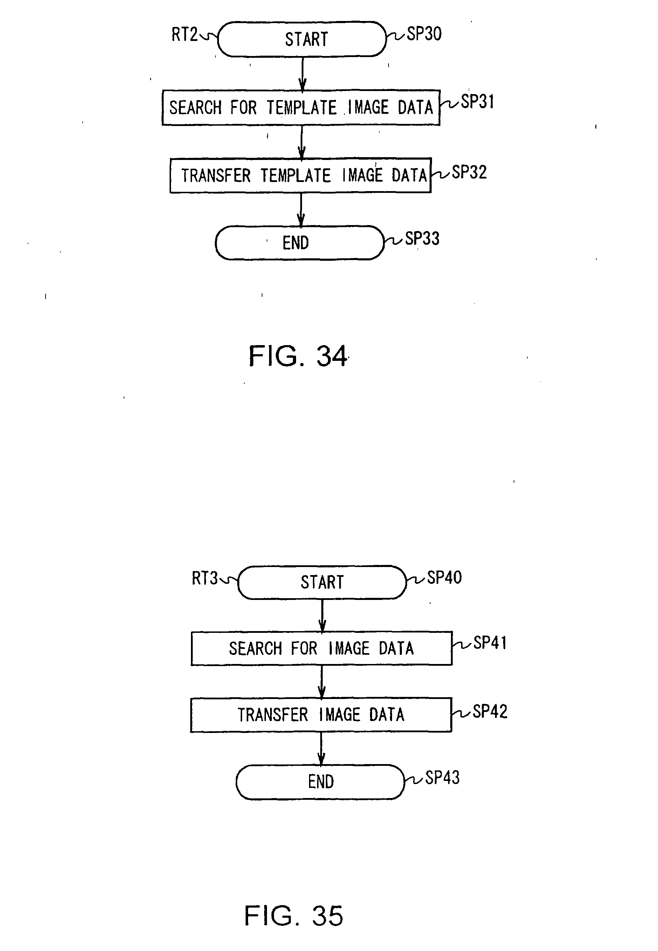

As to the server device 2, when the downloading of template images is demanded at the step SP3 in a print order/delivery procedure RT1 for a print service supply device PM₁ - PMₙ or print ordering device PN₁ - PNₙ, the CPU45 of the server device 2 starts executing a template image transfer procedure RT2 shown in Fig. 34 at the step SP30 to search for template image data D7 demanded, which is, when detected, transferred to the print service supply device PM₁ - PMₙ or print ordering device PN₁ - PNₙ.

It means that if the downloading of template images is demanded from a print service supply device PM₁ - PMₙ or print ordering device PN₁ - PNₙ, the CPU45 starts the template image transfer procedure RT2 at the step SP30 and searches for the template image data D7 from among various applications retained in the ROM47 at the next step SP31.

When the template image data D7 is retrieved from the ROM47, the CPU45 proceeds to the next step SP32 to transfer the template image data D7 demanded to the print service supply device PM₁ - PMₙ or print ordering device PN₁ - PNₙ, and then proceeds to the step SP33, terminating the template image transfer procedure RT2.

### (4-2) Image Data Transfer Procedure

With the server device 2, if the downloading is demanded of the server image data D4 stored in the large-capacity memory 43 of the server device 2 with the corresponding reception number and password transferred at the step SP8 in the print ordering/delivery procedure RT1 for a print service supply device PM₁ - PMₙ or print ordering device PN₁ - PNₙ, the CPU45 of the server device 2 starts executing an image data transfer procedure RT3 shown in Fig. 35 at the step SP40 to search for the server image data D4 corresponding to the reception number and password transferred, which is, when detected, transferred to the print service supply device PM₁ - PMₙ or print ordering device PN₁ - PNₙ.

It means that if the downloading is demanded of the server image data D4 stored in the large-capacity memory 43 of the server device 2 with the corresponding reception number and password transferred from a print service supply device PM₁ - PMₙ or print ordering device PN₁ - PNₙ, the CPU45 of the server device 2 starts executing the image data transfer procedure RT3 at the step SP40, and at the next step SP41 searches for the server image data D4 corresponding to the reception number and password transferred from among a plurality of server image data retained in the large-capacity memory 43.

Upon retrieving the server image data D4 corresponding to the reception number and password supplied from a print service supply device PM₁ - PMₙ or print ordering device PN₁ - PNₙ at the step SP41, the CPU45 proceeds to the next step SP42 to transfer the server image data D4 to the print service supply device PM₁-PMₙ or print ordering device PN₁ - PNₙ. Then the CPU45 proceeds to the step SP43, terminating this image data transfer procedure RT3. (4-3) Provisional Order Procedure

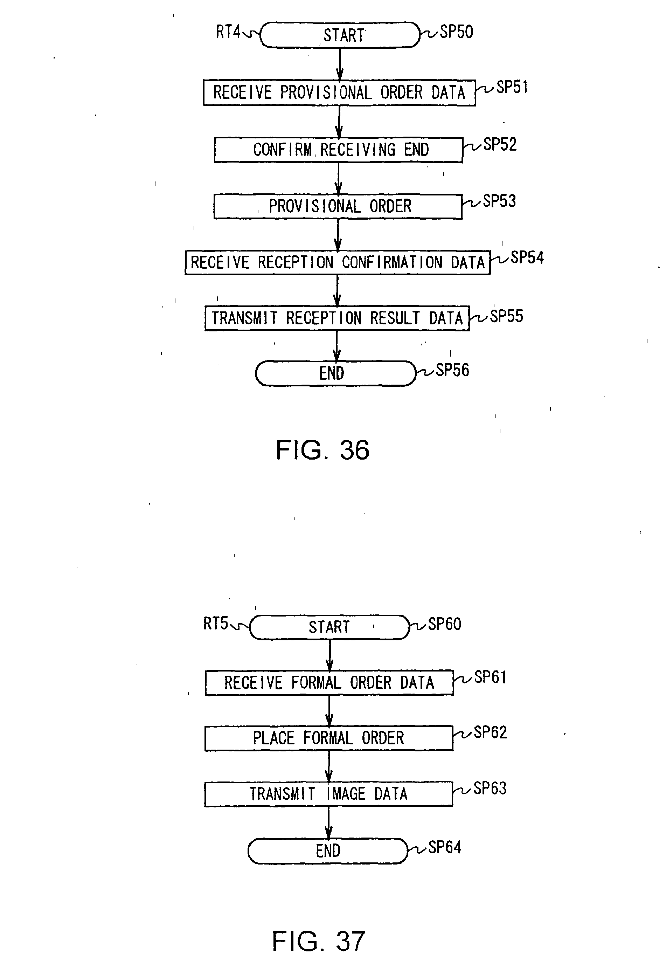

Furthermore, upon receiving a provisional order data for ordering the printing of images desired by a user at the step SP23 in the print ordering/delivery procedure RT1 for the print service supply device PM₁ - PMₙ or print ordering device PN₁ - PNₙ, the CPU45 of the server device 2 starts the provisional order procedure RT4 shown in Fig. 36 at the step SP50, and confirms based on the provisional order with a host print service device PO₁ - POₙ with which an order is to be placed if the contents of the provisional order are acceptable as a formal order.

upon receiving provisional order data for ordering the printing of images desired by a user from a print service supply device PM₁ - PMₙ or print ordering device PN₁ - PNₙ, the CPU45 starts executing a provisional order procedure RT4 at the step SP50, and then proceeds to the step SP51 to receive this provisional order.

Upon confirming at the step SP52 a host print service device PO₁ - POₙ with which an order is to be placed in accordance with the provisional order data received, the CPU45 proceeds to the step SP53 to access the host print service device PO₁ - POₙ to place an order with it for the printing of images based on the provisional order, and confirms each other if the printing of images with the contents (number of prints, desired time and date when the finished prints are available) of the order is acceptable.

Then the CPU45 receives the result of the foregoing as reception confirmation data at the step SP54, the order acceptance result based on which is transmitted to the print service supply device PM₁ - PMₙ or print ordering device PN₁ - PNₙ, origin of the order as order acceptance result data. The CPU45 then proceeds to the next step SP56, terminating this provisional order procedure RT4.

### (4-4) Print Order Procedure

When the server device 2 receives a firm order transmitted from a print service supply device PM₁ - PMₙ or print ordering device PN₁ - PNₙ at the step SP27 in the print order/delivery procedure RT1, the CPU45 of the server device 2 starts executing a print order procedure RT5 shown in Fig. 37 at the step 60, and places an order with the host print service device PO₁ - POₙ which issued the provisional order for the printing of images based on this formal order.

It means that when the formal order is transmitted from a print service supply device PM₁ - PMₙ or print ordering device PN₁ - PNₙ, the CPU45 starts executing the print order procedure RT5 at the step SP60 and proceeds to the next step SP61 to receive the formal order.

The CPU45 proceeds to the step SP62 to make access to the host print service device PO₁ - POₙ or order receiving end according to the formal order data received, with which an order is placed for the printing of the images based on this formal order.

The CPU45 then transmits the image data for printing images at the step SP63 to the host print service device PO₁ - POₙ to which it is making access, and proceeds to the next step SP64, terminating the print order procedure RT5.

In the server device 2, when the printing of images based on the order is completed at the host print service device PO₁ - POₙ receiving the order, the CPU45 receives a 'printing complete' report from the host print service device PO₁ - POₙ and recognizes that the printing of the images ordered is completed.

### (5) Print Procedure in Host Print Service Device

### (5-1) Provisional Order Procedure

When the server device 2 makes access to a host print service device PO₁ - POₙ at the step SP53 in the provisional order procedure RT4, the CPU 22 of the host print service device PO₁-POₙ starts executing a provisional order procedure RT6 at the step SP70 and confirms whether or not a provisional order from the server device 2 can be accepted, the result of which is transmitted to the server device 2.

It means that when the host print service device PO₁ - POₙ is made access to by the server device 2, the CPU 22 starts executing the provisional order procedure RT6 at the step SP70 and then proceeds to the next step SP71 to receive temporarily a provisional order for printing images demanded from the server device 2.

The CPU 22 then proceeds to the step SP72 to confirm the contents (number of prints, time and date when prints are completed, etc.) of the provisional order and, after confirming as well if this printing order can be accepted the CPU 22 proceeds to the step SP73.

The CPU 22 transfers the result of the confirmation to the server device 2 as reception confirmation data and proceeds to the step SP74, terminating the provisional order procedure RT6.

### (5-2) Image Print Procedure

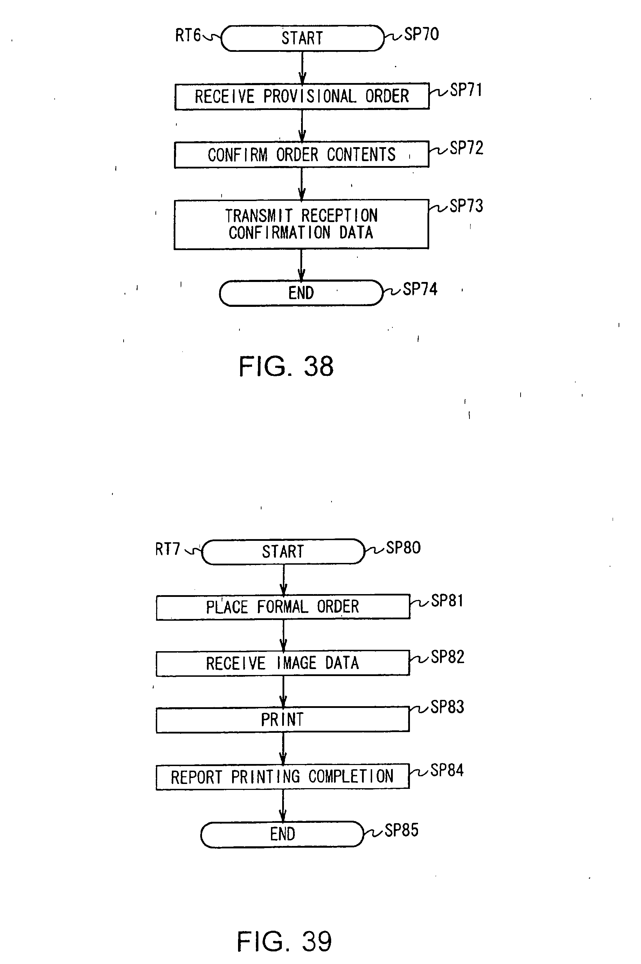

When the server device 2 makes access to a host print service device PO₁ - POₙ at the step SP62 in the print order procedure RT5, the CPU 22 of the host print service device PO₁-POₙ starts executing an image print procedure RT7 sown in Fig. 39 at the step SP80 to print images ordered from the server device 2.

It means that when the host print service device PO₁ - POₙ is made access to by the server device 2 at the step SP62 in the print order procedure RT5 for the server device 2, the CPU 22 starts executing this image print procedure RT7 at the step SP80 and then proceeds to the next step SP81 to receive an order for printing images ordered from the server device 2.

Then the CPU 22 proceeds to the next step SP82 to receive the image data of an image printing order transmitted form the server device 2. The CPU 22 carries out printing images at the step SP83 based on the image data in accordance with the contents of the order received. When the printing is completed, the CPU 22 proceeds to the next step SP84.

The CPU 22 notifies the server device 2 of the completion of the printing at the step SP84, and then proceeds to the next step SP85, terminating the image print procedure RT7.

### (6) Operation and effects of This Embodiment

With the printing system 1 structured as described heretofore, a user is supposed to visit a nearby site where one of a plurality of print service supply devices PM₁ to PMₙ or print ordering devices PN₁ to PNₙ is installed in order to place an order for the printing of images based on the image data in the recording medium or digital still camera the user has brought in by selecting given images on the GUI frame and carrying out simple input operations.

In case of ordering a large volume of prints users are supposed to create given ordering data, which should be once transmitted to the server device 2, along with the corresponding image data.

Confirmation is made by the server device 2 on whether this order request can be acceptable to a host print service device PO₁ - POₙ appointed by the user based on the ordering data and image data transmitted, and an order is given to the host print service device PO₁ - POₙ, which carries out the printing of images according to the order data.

And, the user is supposed to visit the site of the host print service device PO₁ - POₙ on an appointed date to pick up those printed images.

Thus, with the printing system 1 it is possible for users to pick up the printed images according to their operations at that place or at another place appointed on an appointed date, thereby obviating the need for a user to visit a shop to place an order and pick it up.

In the case of sending printed images to a person living in a remote place, he/she can collect them at a designated print service supply device PM₁ - PMₙ by carrying out the specific operations as in the foregoing, thereby facilitating transmission and reception of printed images to and from a person in a remote place. Accordingly, it obviates the need for sending the recording media, etc, with recording data recording on them by mail or other transportation means.

In such environments as a user's home or office provided with a personal computer, the user can retrieve image data in the server device 2 via the Internet by using said computer as a client computer PC₁ - PCₙ by which the user can order prints based on the image data from the server device 2. Furthermore, in the case that a client computer PC₁ - PCₙ has a printer, the images can be printed on the spot, thus reducing the use's burden in ordering and collecting the prints greatly.

Furthermore, in the printing system 1 the server device 2 stores a plurality of template image data in it, so that it is possible to download such template image data from the server device 2 with the use of a print service supply device PM₁ - PMₙ, print ordering device PN₁ - PNₙ, host print service device PO₁ - POₙ, or client computer PC₁- PCₙ.

With the printing system 1, therefore, it is possible to have print images requested by a user composed with template images desired by the user based on a variety of template image data downloaded from the server device 2, thereby eliminating the need for the user to purchase application software for image composition.

Due to the foregoing arrangements, users can collect printed images at an appoint site on the spot, on an appointed date by achieving ordering and collecting by operating their terminal units connected to the network. Consequently users are no longer required to visit shops for ordering and collecting prints, enabling them easily to send/receive prints of images to/from persons living in remote places. In this way the printing system 1 can be realized that significantly enhances the simultaneity and convenience in ordering and collecting prints.

### (7) Other Embodiments

In the foregoing mode of carrying out the present invention, elucidation is given on the case wherein the server device 2 is applied as a server means to be connected to a network. However, the present invention is not limited to it, but can be applicable widely to a variety of other server means as long as they are capable of recording and storing image data to be supplied through a network.

In the foregoing mode of carrying out the present invention, elucidation is given on the case wherein a print service supply device PM₁ - PMₙ and host print service device PO₁ - POₙ are applied as printing means to be installed in plural numbers connected to the network. However, the present invention is not limited to it, but can be applicable widely to a variety of other printing means as long as they are printing means capable of retrieving appointed image data from the server device 2 through a network responding to external operations and of printing images based on the retrieved image data.

In the foregoing mode of carrying out the present invention, elucidation is given on the case wherein a print ordering device PN₁ - PNₙ is applied as a means for transferring images, connected to a network. However, the present invention is not limited to it, but can be applicable widely to a variety of other image transferring means as long as they are image transferring means capable of transferring image data to the server device 2 through a network.

In the foregoing mode of carrying out the present invention, elucidation is given on the case wherein image data D2 recorded on various recording media such as a memory stick, compact flash, smart media, floppy disk, compact disk, or PC card, etc., and image data D3 captured from a digital still camera through the video capturing board 19A, scanner 19B, and digital interface circuit 19C are used as image data to be retrieved from the recording media. However, the present invention is not limited to it, but can be applicable widely to a variety of other image data as long as they are image data captured electronically from the recording media.

In the foregoing mode of carrying out the present invention, elucidation is given on the case wherein template image data D7 is applied as image composition data. However, the present invention is not limited to it, but can be applicable widely to a variety of other image composition data as long as they are image composition data to be composed with images desired by users.

In the foregoing mode of carrying out the present invention, elucidation is given on the case wherein the charging unit 16 consisting of the bill discriminating unit 16A, coin discriminating unit 16B, and charge control unit 16C are applied as a charge processing unit. However, the present invention is not limited to it, but can be applicable widely to a variety of other types of charge processing units as long as they can calculate charges based on the processing contents selected by users and carry out given charging processes according to the calculation results.

In the foregoing mode of carrying out the present invention, elucidation is given on the case wherein the media unit 12 of a print service supply device PM₁ - PMₙ and print ordering device PN₁ - PNₙ is applied as retrieving means. However, the present invention is not limited to it, but can be applicable widely to a variety of other retrieving means as long as they can retrieve image data recorded on the recording media.

In the foregoing mode of carrying out the present invention, elucidation is given on the case wherein the terminal adapter device 25 of the personal computer 10 of a print service supply device PM₁ - PMₙ and print ordering device PN₁ - PNₙ is applied as a transmitting unit for transmitting image data retrieved from the recording media to the server device 2 through the terminal adapter device 25 under the control of the CPU 22 of the personal computer 10. However, the present invention is not limited to it, but can be applicable widely to a variety of other transmitting units as long as they can transmit image data retrieved from the recording media by the retrieving means to the server device 2 through a network.

In the foregoing mode of carrying out the present invention, elucidation is given on the case wherein a reception number is entered with 18 digits. However, reception formation may also be composed of hiragana, katakana (both typical Japanese letters), alphabet, Greek letters, and mix of them as well as other arrays of digits than 18 digits as long as image data transmitted can be confirmed at both the transmitting and receiving ends.

Furthermore, in the foregoing mode of carrying out the present invention, elucidation is given on the case wherein a memory number of four (4) digits is entered as a password. However, the present invention is not limited to it, but the memory number may also be composed of e.g. hiragana, katakana (both typical Japanese letters), alphabet, Greek letters, marks and mix of them as well as other arrays of digits than 4 digits as long as it serves security purposes by preventing image data transferred from being retrieved freely by the third parties other than the parties concerned.

Furthermore, in the foregoing mode of carrying out the present invention, elucidation is given on the case wherein a PC card or floppy disk is used as recording means for recording desired images at the step SP5 or SP16 of the print order/delivery procedure RT1 illustrated in Fig. 11. However, the present invention is not limited to it, but a wide variety of other recording media such as a memory stick, compact flash, smart media, and compact disk, etc. may be used as long as they can capture images electronically by a digital still camera, etc.

Furthermore, in the foregoing mode of carrying out the present invention, elucidation is given on the case wherein a display unit for a personal computer obtained on the market is utilized as is for the display unit 11 equipped with a monitor 11A for a print service supply device PM₁ - PMₙ. However, the present invention is not limited to it, but a variety of other display units may be used as long as they can display images based on the image data retrieved from the recording media.

As described heretofore, according to the present invention, a printing system comprises server means connected to a network for retaining image data supplied through said network, printing means installed in plurality, for retrieving appointed image data by external operations through the network and for printing images based on the image data thus retrieved, and image data transferring means connected to the network for transferring image data to the server means through the network, so that desired images can be printed easily, obviating the need for users to visit print shops, etc. to place orders for prints as well as reducing users' burden. Thus, a printing system can be realized that significantly enhances the simultaneity and convenience in ordering and collecting prints.

Also, according to the present invention, a printing method comprises a plurality of printing means, server means for retaining image data supplied, and transferring means for transferring the image data, all connected one another through a network. The image data is transferred through the network to the server means and once retained there. Part of the image data appointed by the server is retrieved from the server means by means of exterior operations to have images printed based the retrieved image data, so that desired images can be printed easily, thereby obviating the need for users to visit print shops, etc. to place orders for prints as well as reducing users' burden. Thus, a printing method can be realized that significantly enhances the simultaneity and convenience in ordering and collecting prints.

While there has been described in connection with the preferred embodiments of the invention, it will be obvious to those skilled in the art that various changes and modifications may be aimed, therefore, to cover in the appended claims all such changes and modifications as fall within the true spirit and scope of the invention.

## Claims

1. A printing system (1) comprising printing means (PM₁..; PO₁..), print order devices (PN₁..) and client computers (PC₁..), all installed in a plurality at different locations and connected to a network (3, 4), wherein a server means (2) is provided and connected to said network (3, 4), for retaining image data (D4) supplied through said network (3, 4), and image data transferring means (PN₁..) connected to said network (3, 4) is transferring image data (D2, D3) to said server means (2) through said network (3, 4), wherein images based on the image data (D4; D2; D3) in said server means(2) appointed by a user using any of said client computers (PC₁..), or any of printing means (PM₁..; PO₁..), or any of print order devices (PN₁..) are printed on any desired printing means.

2. The printing system according to claim 1, wherein
each of said printing means (PM₁..; PO₁..) comprises
retrieving means (PM₁..) for retrieving said image data recorded on a recording medium (12), and
transmitting means (25) for transmitting said image data (D2) to said server means (2) through said network (3, 4).

3. The printing system according to claim 1 or 2, wherein
said image data transferring means (PN₁..) comprises
a retrieving unit (12) for retrieving image data (D2) recorded on a recording means (IC7..IC12).

4. The printing system according to any one of claims 1 to 3, wherein said server means (2) retains composite image data (IC5) as well as said image data (D4) to compose images based on user operations.

5. The printing system according to claim 4, wherein each of said printing means (PM₁..; PO₁..) retrieves said composite image data (IC5) from said server means (2) as required.

6. The printing system according to claim 4 or 5, wherein external user operations in each of said printing means (PM₁..; PO₁..) are based on ordering data (D8) created in dependence upon desired contents to be printed.

7. The printing system according to any one of claims 1 to 6, wherein said server means (2) controls client data based on said ordering data (D8) given from each of said printing means (PM₁.. ; PO₁..).

8. The printing system according to claim 6 or 7, further comprising charge processing means (16) for calculating a charge based on said ordering data and performing a given charging process in dependence upon the calculated result.

9. The printing system according to any one of claims 1 to 8, wherein each of said printing means (PM₁..; PO₁..) comprises recording means (12) for recording said image data (D4) on a given recording medium (IC7..IC12).

10. The printing system according to claim 9, wherein each of said printing means (PM₁..; PO₁..) comprises a charge processing means (16) for calculating a charge based on said recording contents and performing a given charge process based on the calculated result.

11. The printing system according to claim 9 or 10, wherein said server means (2) retains said recording data as well as a given password designated.

12. A printing method comprising:
a first step of connecting via a network (3, 4) a server means (2), a plurality of printing means (PM₁..; PO₁..), print order devices (PN₁..) and client computers (PC₁..), all installed in a plurality at different locations,
a second step of transferring (PN₁..) image data (D4, D2, D3) to be retained in said server means (2) through said network (3, 4); and
a third step of printing images based on the image data (D4; D2; D3) in said server means (2) appointed by a user using any of said client computers (PC₁..), or any of printing means (PM₁..; PO₁..), or any of print order devices (PN₁..), said printing being performed on any desired printing device.

13. The printing method according to claim 12, wherein in said second step (PN₁..) image data (D2) recorded on a recording medium (12) are retrieved by anyone of said printing means (PM₁..; PO₁..), and the retrieved image data are transmitted to said server means (2) through said network (3, 4).

14. The printing method according to claim 12, wherein in said second step (PN₁..PNₙ) image data (D2) recorded on a recording medium (12) are retrieved by anyone of said print order devices (PN₁..), and the retrieved image data are transmitted to said server means (2) through said network (3, 4).

15. The printing method according to anyone of claims 12 to 14, wherein said server means (2) retains composite image data (IC5) as well as said image data (D4) to compose images based on user operations.

16. The printing method according to anyone of claims 12 to 15, wherein in said third step external user operations are based on ordering data created in dependence upon desired printing contents.

17. The printing method according to claim 16, further comprising a fourth step of managing client data based on said ordering data.

18. The printing method according to claim 17, further comprising a fifth step of calculating a charge (16) based on said ordering data, and performing a given charging process based on the calculated result.

19. The printing method according to anyone of claims 12 to 18 wherein in said third step said image data are recorded on a given recording medium (12).

20. The printing method according to claim 19, wherein a charge (16) based on said recording contents is calculated, and a given charging process is performed based on the calculated result.

21. The printing method according to anyone of claims 12 to 20, wherein in said second step said image data in said server means (2) are retained, along with a given password designated.

## Patentansprüche

1. Drucksystem (1) mit Druckeinrichtungen (PM₁...;PO₁...), Druckauftragseinrichtungen (PN₁...) und Kundencomputern (PC₁...), die alle in einer Mehrzahl an unterschiedlichen Stellen installiert und mit einem Netzwerk (3, 4) verbunden sind, wobei eine Servereinrichtung (2) bereitgestellt und mit dem Netzwerk (3, 4) verbunden ist, um durch das Netzwerk (3, 4) zugeführte Bilddaten (D4) zu halten, und wobei mit dem Netzwerk (3, 4) verbundene Bilddaten-Übertragungseinrichtungen (PN₁...) durch das Netzwerk (3, 4) Bilddaten (D2, D3) zur Servereinrichtung (2) übertragen, wobei auf Basis der von einem irgendeinen der Kundencomputer (PC1,...) oder irgendeine der Druckeinrichtungen (PN₁...;PO₁...) oder irgendeine der Druckauftragseinrichtungen (PN₁...) benutzenden Benutzer bestellten Bilddaten (D4; D2; D3) in der Servereinrichtung (2) bei irgendeiner gewünschten Druckeinrichtung Bilder gedruckt werden.

2. Drucksystem nach Anspruch 1, wobei
jede der Druckeinrichtungen (PN₁...; PO₁...),
eine Wiedergewinnungseinrichtung (PM₁...) zur Wiedergewinnung der auf ein Aufzeichnungsmedium (12) aufgezeichneten Bilddaten und
eine Übertragungseinrichtung (25) zur Übertragung der Bilddaten (D2) durch das Netzwerk (3, 4) zur Servereinrichtung (2) aufweist.

3. Drucksystem nach Anspruch 1 oder 2, wobei
die Bilddaten-Übertragungseinrichtung (PN₁...)
eine Wiedergewinnungseinheit (12) zur Wiedergewinnung von auf einer Aufzeichnungseinrichtung (IC7,...IC12) aufgezeichneten Bilddaten (D2) aufweist.

4. Drucksystem nach einem der Ansprüche 1 bis 3, wobei die Servereinrichtung (2) zusammengesetzte Bilddaten (IC5) sowie die Bilddaten (D4) hält, um auf Basis von Benutzeroperationen Bilder zusammenzusetzen.

5. Drucksystem nach Anspruch 4, wobei jede der Druckeinrichtungen (PM₁...;PO₁...) (2) die zusammengesetzten Bilddaten (IC5) von der Servereinrichtung wie benötigt wiedergewinnt.

6. Drucksystem nach Anspruch 4 oder 5, wobei in jeder der Druckeinrichtungen (PM₁...;PO₁...) externe Benutzeroperationen auf Auftragsdaten (D8) basiert sind, die in Abhängigkeit von gewünschten zu druckenden Inhalten erzeugt werden.

7. Drucksystem nach einem der Ansprüche 1 bis 6, wobei die Servereinrichtung (2) Kundendaten auf Basis der von jeder der Druckeinrichtungen (PM₁...;PO₁...) gegebenen Auftragsdaten (D8) steuert.

8. Drucksystem nach Anspruch 6 oder 7, außerdem mit einer Gebührenverarbeitungseinrichtung (16) zur Berechnung einer Gebühr auf Basis der Auftragsdaten und Ausführung eines gegebenen Belastungsprozesses in Abhängigkeit vom berechneten Resultat.

9. Drucksystem nach einem der Ansprüche 1 bis 9, wobei jede der Druckeinrichtungen (PM₁...;PO₁...) eine Aufzeichnungseinrichtung (12) zur Aufzeichnung der Bilddaten (D4) auf einem gegebenen Aufzeichnungsmedium (IC7...IC12) aufweist.

10. Drucksystem nach Anspruch 9, wobei jede der Druckeinrichtungen (PM₁...;PO₁...) eine Gebührenverarbeitungseinrichtung (16) zur Berechnung einer Gebühr auf Basis der Aufzeichnungsinhalte und Ausführung eines gegebenen Belastungsprozesses auf Basis des Berechnungsresultats aufweist.

11. Drucksystem nach Anspruch 9 oder 10, wobei die Servereinrichtung (2) die Aufzeichnungsdaten sowie ein gegebenes designiertes Passwort hält.

12. Druckverfahren, aufweisend:
einen ersten Schritt zum Verbinden einer Servereinrichtung (2), mehrerer Druckeinrichtungen (PM₁...;PO₁...), Druckauftragseinrichtungen (PN₁...) und Kundencomputer (PC₁...) die alle in einer Mehrheit an unterschiedlichen Stellen installiert sind, über ein Netzwerk (3, 4),
einen zweiten Schritt zur Übertragung (PN₁...) von in der Servereinrichtung (2) zu halten Bilddaten (D4, D2, D3) durch das Netzwerk (3, 4), und
einen dritten Schritt zum Drucken von Bildern auf Basis der Bilddaten (D4; D2; D3) in der Servereinrichtung (2), die ein Benutzer unter Benutzung irgendeines der Kundencomputer (PC₁...) oder irgendeiner der Druckeinrichtungen (PM₁...;PO₁...) oder irgendeiner der Druckauftragseinrichtungen (PN₁...) bestellt, wobei das Drucken bei irgendeiner gewünschten Druckeinrichtung ausgeführt wird.

13. Druckverfahren nach Anspruch 12, wobei beim zweiten Schritt (PN₁...) auf einem Aufzeichnungsmedium (12) aufgezeichnete Bilddaten (D2) durch irgendeine der Druckeinrichtungen (PM₁...;PO₁...) wiedergewonnen werden und die wiedergewonnenen Bilddaten durch das Netzwerk (3, 4) zur Servereinrichtung (2) übertragen werden.

14. Druckverfahren nach Anspruch 12, wobei beim zweiten Schritt (PN₁...;PNₙ) auf einem Aufzeichnungsmedium (12) aufgezeichnete Bilddaten (D2) durch irgendeine der Druckauftragseinrichtungen (PN₁...) wiedergewonnen werden und die wiedergewonnen Bilddaten durch das Netzwerk (3, 4) zur Servereinrichtung (2) übertragen werden.

15. Druckverfahren nach einem der Ansprüche 12 bis 14, wobei die Servereinrichtung (2) zusammengesetzte Bilddaten (IC5) sowie die Bilddaten (D4) hält, um Bilder auf Basis von Benutzeroperationen zusammenzusetzen.

16. Druckverfahren nach einem der Ansprüche 12 bis 15, wobei beim dritten Schritt externe Benutzeroperationen auf Auftragsdaten basiert sind, die in Abhängigkeit von gewünschten Druckinhalten erzeugt werden.

17. Druckverfahren nach Anspruch 16, außerdem mit einem vierten Schritt zum Verwalten von Kundendaten auf Basis der Auftragsdaten.

18. Druckverfahren nach Anspruch 17, außerdem mit einem fünften Schritt zur Berechnung einer Gebühr (16) auf Basis der Auftragsdaten und Ausführung eines gegebenen Belastungsprozesses auf Basis des berechneten Resultats.

19. Druckverfahren nach einem der Ansprüche 12 bis 18, wobei beim dritten Schritt Bilddaten auf einem gegebenen Aufzeichnungsmedium (12) aufgezeichnet werden.

20. Druckverfahren nach Anspruch 19, wobei eine Gebühr (16) auf Basis des aufgezeichneten Inhalts berechnet wird und ein gegebener Belastungsprozess auf Basis des berechneten Resultats aufgeführt wird.

21. Druckverfahren nach einem der Ansprüche 12 bis 20, wobei beim zweiten Schritt die Bilddaten in der Servereinrichtung (2) zusammen mit einem gegebenen designierten Passwort gehalten werden.

## Revendications

1. Système d'impression (1) comprenant des moyens d'impression (PM₁... ; PO₁...), des dispositifs de commande d'impression (PN₁...) et des ordinateurs clients (PC₁...), tous installés dans une pluralité de lieux différents et reliés à un réseau (3, 4), dans lequel un moyen de serveur (2) est prévu et relié audit réseau (3, 4) pour conserver des données image (D4) fournies par le biais dudit réseau (3, 4), et des moyens de transfert de données image (PN₁...) reliés audit réseau (3, 4) transfèrent des données image (D2, D3) vers ledit moyen de serveur (2) par le biais dudit réseau (3, 4), dans lequel des images basées sur les données image (D4 ; D2 ; D3) dans ledit moyen de serveur (2) fixées par un utilisateur utilisant n'importe lequel desdits ordinateurs clients (PC₁...), n'importe lequel des moyens d'impression (PM₁... ; PO₁...) ou n'importe lequel des dispositifs de commande d'impression (PN₁...) sont imprimées sur n'importe quel moyen d'impression souhaité.

2. Système d'impression selon la revendication 1, dans lequel chacun desdits moyens d'impression (PM₁... ; PO₁...) comprend des moyens d'extraction (PM₁...) destinés à extraire lesdites données image enregistrées sur un support d'enregistrement (12), et
un moyen de transmission (25) destiné à transmettre lesdites données image (D2) audit moyen de serveur (2) par le biais dudit réseau (3, 4).

3. Système d'impression selon la revendication 1 ou 2, dans lequel lesdits moyens de transfert de données image (PN₁...) comprennent une unité d'extraction (12) destinée à extraire les données image (D2) enregistrées sur un moyen d'enregistrement (IC7... IC12).

4. Système d'impression selon l'une quelconque des revendications 1 à 3, dans lequel ledit moyen de serveur (2) conserve des données image composites (IC5) ainsi que lesdites données image (D4) pour composer des images basées sur les opérations d'utilisateur.

5. Système d'impression selon la revendication 4, dans lequel chacun desdits moyens d'impression (PM₁... ; PO₁...) extrait lesdites données image composites (IC5) à partir dudit moyen de serveur (2) suivant les besoins.

6. Système d'impression selon la revendication 4 ou 5, dans lequel les opérations d'utilisateur externes dans chacun desdits moyens d'impression (PM₁... ; PO₁...) sont basées sur des données de commande (D8) créées en fonction du contenu que l'on souhaite imprimer.

7. Système d'impression selon l'une quelconque des revendications 1 à 6, dans lequel ledit moyen de serveur (2) contrôle les données client basées sur lesdites données de commande (D8) données par chacun desdits moyens d'impression (PM₁... ; PO₁...).

8. Système d'impression selon la revendication 6 ou 7, comprenant en outre un moyen de traitement de charge (16) destiné à calculer une charge sur la base desdites données de commande et à mettre en oeuvre un procédé de chargement donné en fonction du résultat calculé.

9. Système d'impression selon l'une quelconque des revendications 1 à 8, dans lequel chacun desdits moyens d'impression (PM₁... ; PO₁...) comprend un moyen d'enregistrement (12) destiné à enregistrer lesdites données image (D4) sur un support d'enregistrement donné (IC7... IC12).

10. Système d'impression selon la revendication 9, dans lequel chacun desdits moyens d'impression (PM₁... ; PO₁...) comprend un moyen de traitement de charge (16) destiné à calculer une charge sur la base dudit contenu d'enregistrement et à mettre en oeuvre un procédé de charge donné sur la base du résultat calculé.

11. Système d'impression selon la revendication 9 ou 10, dans lequel ledit moyen de serveur (2) conserve lesdites données d'enregistrement ainsi qu'un mot de passe donné désigné.

12. Procédé d'impression comprenant :
une première étape consistant à relier via un réseau (3, 4) un moyen de serveur (2), une pluralité de moyens d'impression (PM₁... ; PO₁...), des dispositifs de commande d'impression (PN₁...) et des ordinateurs clients (PC₁...), tous installés dans une pluralité de lieux différents,
une deuxième étape consistant à transférer (PN₁...) des données image (D4, D2, D3) devant être conservées dans ledit moyen de serveur (2) par le biais dudit réseau (3, 4) ; et
une troisième étape consistant à imprimer des images basées sur les données image (D4 ; D2 ; D3) dans ledit moyen de serveur (2) fixées par un utilisateur utilisant n'importe lequel desdits ordinateurs clients (PC₁...), n'importe lequel des moyens d'impression (PM₁... ; PO₁...) ou n'importe lequel des dispositifs de commande d'impression (PN₁...), ladite impression étant réalisée sur n'importe quel dispositif d'impression souhaité.

13. Procédé d'impression selon la revendication 12, dans lequel, au cours de ladite deuxième étape (PN₁...) les données image (D2) enregistrées sur un support d'enregistrement (12) sont extraites par n'importe lequel desdits moyens d'impression (PM₁... ; PO₁...), et les données image extraites sont transmises audit moyen de serveur (2) par le biais dudit réseau (3, 4).

14. Procédé d'impression selon la revendication 12, dans lequel, au cours de ladite deuxième étape (PN₁... PNₙ...) les données image (D2) enregistrées sur un support d'enregistrement (12) sont extraites par n'importe lequel desdits dispositifs de commande d'impression (PN₁...), et les données image extraites sont transmises audit moyen de serveur (2) par le biais dudit réseau (3, 4).

15. Procédé d'impression selon l'une quelconque des revendications 12 à 14, dans lequel ledit moyen de serveur (2) conserve des données image composites (IC5) ainsi que lesdites données image (D4) pour composer des images basées sur les opérations d'utilisateur.

16. Procédé d'impression selon l'une quelconque des revendications 12 à 15, dans lequel, au cours de ladite troisième étape, les opérations d'utilisateur externes sont basées sur des données de commande créées en fonction du contenu d'impression souhaité.

17. Procédé d'impression selon la revendication 16, comprenant en outre une quatrième étape consistant à gérer les données client sur la base desdites données de commande.

18. Procédé d'impression selon la revendication 17, comprenant en outre une cinquième étape consistant à calculer une charge (16) sur la base desdites données de commande, et à mettre en oeuvre un procédé de chargement donné sur la base du résultat calculé.

19. Procédé d'impression selon l'une quelconque des revendications 12 à 18, dans lequel, au cours de ladite troisième étape, lesdites données image sont enregistrées sur un support d'enregistrement donné (12).

20. Procédé d'impression selon la revendication 19, dans lequel une charge (16) basée sur ledit contenu d'enregistrement est calculée, et un procédé de chargement donné est mis en oeuvre sur la base du résultat calculé.

21. Procédé d'impression selon l'une quelconque des revendications 12 à 20, dans lequel, au cours de ladite deuxième étape, lesdites données image dans ledit moyen de serveur (2) sont conservées, ainsi qu'un mot de passe donné désigné.
